(19) Europäisches Patentamt
European Patent Office
Office européen des brevets

(11) **EP 3 531 753 B1**

(12) **EUROPEAN PATENT SPECIFICATION**

(45) Date of publication and mention
of the grant of the patent:
**22.06.2022  Bulletin 2022/25**

(21) Application number: **18735921.1**

(22) Date of filing: **04.01.2018**

(51) International Patent Classification (IPC):
$H04W\ 52/14^{(2009.01)}$   $H04W\ 52/24^{(2009.01)}$
$H04W\ 52/36^{(2009.01)}$   $H04W\ 52/38^{(2009.01)}$

(52) Cooperative Patent Classification (CPC):
**H04W 52/14; H04W 52/146; H04W 52/242;
H04W 52/243; H04W 52/36; H04W 52/38**

(86) International application number:
**PCT/CN2018/071399**

(87) International publication number:
**WO 2018/127100 (12.07.2018 Gazette 2018/28)**

(54) **UPLINK POWER CONTROL METHOD AND COMMUNICATION APPARATUS**

UPLINK-LEISTUNGSSTEUERUNGSVERFAHREN UND KOMMUNIKATIONSVORRICHTUNG

PROCÉDÉ DE CONTRÔLE DE PUISSANCE DE LIAISON MONTANTE ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2017  CN 201710010991
24.03.2017  CN 201710184415**

(43) Date of publication of application:
**28.08.2019  Bulletin 2019/35**

(73) Proprietor: **Huawei Technologies Co., Ltd.
Longgang District
Shenzhen, Guangdong 518129 (CN)**

(72) Inventors:
• **WANG, Yafei
Shenzhen
Guangdong 518129 (CN)**
• **ZHANG, Chi
Shenzhen
Guangdong 518129 (CN)**
• **GONG, Zhengwei
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**EP-A1- 2 779 760          WO-A2-2011/031059
CN-A- 102 893 678        CN-A- 103 326 809
CN-A- 105 264 973        US-A1- 2013 163 535
US-A1- 2014 213 315**

• **ZTE: "Consideration for uplink power control in
UL CoMP", 3GPP DRAFT; R1-113759
CONSIDERATION FOR UPLINK POWER
CONTROL IN UL COMP, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. San
Francisco, USA; 20111114 - 20111118, 9
November 2011 (2011-11-09), XP050562248,
[retrieved on 2011-11-09]**

## Description

This application claims priority to Chinese Patent Application No. 201710010991.5, filed with the Chinese Patent Office on January 6, 2017 and entitled "UPLINK POWER CONTROL METHOD AND COMMUNICATIONS DEVICE", and Chinese Patent Application No. 201710184415.2, filed with the Chinese Patent Office on March 24, 2017 and entitled "UPLINK POWER CONTROL METHOD AND COMMUNICATIONS DEVICE".

## TECHNICAL FIELD

This application relates to the field of wireless communications technologies, and in particular, to an uplink power control method and a communications device.

## BACKGROUND

In a Long Term Evolution (Long Term Evolution, LTE) wireless communications system, when a terminal device sends data to an evolved NodeB (evolved NodeB, eNB) in a cell that the terminal device has accessed, the evolved NodeB needs to control uplink transmit power of the terminal device; and the terminal device determines the uplink transmit power of the terminal device based on power control indication information delivered by the evolved NodeB.

In a 5th Generation (5th generation, 5G) wireless communications system or a future wireless communications system, a radio environment is more complex and more diversified, and power control in the prior art cannot meet requirements of future mobile communications, affecting system performance.

EP 2 779 760 A1 refers to a base station and a terminal. There is provided the terminal which communicates with the base station, the terminal including: a reception unit, which detects a transmission power control (TPC) command in a downlink control information (DCI) format and obtains a power correction value from the TPC command; and a transmission power control unit, which sets the transmission power of an uplink signal based on a power correction value obtained from a first TPC command when the terminal is in a first state and sets transmission power of the uplink signal based on a power correction value obtained from a second TPC command when the terminal is in a second state.

US 2014/0213315 A1 refers to a method for a terminal transmitting a sounding reference signal in a wireless communication system. More particularly, the method comprises the steps of: receiving from a network at least one first transmission power offset value of the sounding reference signal for a first cell; deciding transmission power of the sounding reference signal for the first cell, based on transmission power for an uplink data channel for a second cell and the at least one transmission power offset value; and transmitting the sounding reference signal for the first cell to the first cell.

## SUMMARY

To meet requirements of future mobile communications and improve system performance, this application provides an uplink power control method and a communications device. This problem is solved by the subject matter of the independent claims. Further implemenation forms are provided in the dependent claims. The technical solutions are described below.

Any other subject-matter falling outside the scope of the claims is to be regarded as an example not in accordance with the invention.

## BRIEF DESCRIPTION OF DRAWINGS

FIG. 1 is a schematic diagram of a wireless communications system according to an embodiment of this application;
FIG. 2 is a flowchart of an uplink power control method according to an embodiment of this application;
FIG. 3 is a flowchart of an uplink power control method according to an embodiment of this application;
FIG. 4 is a flowchart of an uplink power control method according to an embodiment of this application;
FIG. 5 is a flowchart of an uplink power control method according to an embodiment of this application;
FIG. 6 is a flowchart of an uplink power control method according to an embodiment of this application;
FIG. 7 is a flowchart of an uplink power control method according to an embodiment of this application;
FIG. 8 is a flowchart of an uplink power control method according to an embodiment of this application;
FIG. 9 is a schematic structural diagram of a communications device according to an embodiment of this application;
FIG. 10 is a schematic structural diagram of a communications device according to an embodiment of this application;
FIG. 11 is a schematic structural diagram of a communications device according to an embodiment of this application;

FIG. 12 is a schematic structural diagram of a communications device according to an embodiment of this application;

FIG. 13 is a schematic structural diagram of an uplink power control apparatus according to an embodiment of this application;

FIG. 14 is a schematic structural diagram of an uplink power control apparatus according to an embodiment of this application;

FIG. 15 is a schematic structural diagram of an uplink power control apparatus according to an embodiment of this application; and

FIG. 16 is a schematic structural diagram of an uplink power control apparatus according to an embodiment of this application.

## DESCRIPTION OF EMBODIMENTS

To make the objectives, technical solutions, and advantages of this application clearer, the following further describes the implementations of this application in detail with reference to the accompanying drawings.

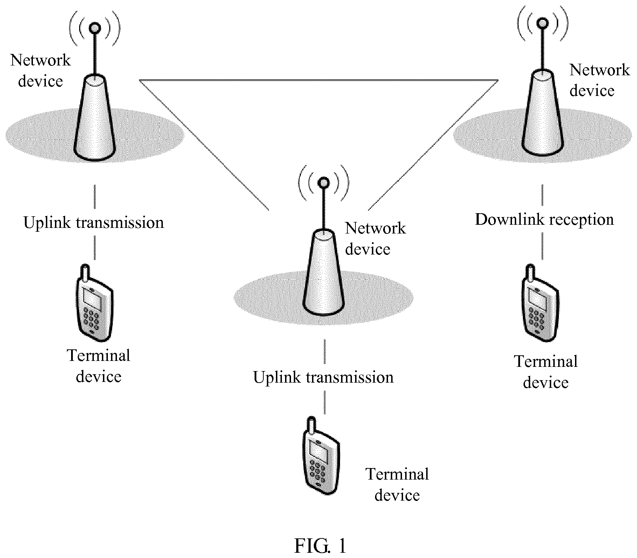

FIG. 1 is a schematic diagram of a wireless communications system to which the technical solutions of the embodiments of this application are applicable.

In the solutions of the embodiments of this application, the wireless communications system shown in FIG. 1 includes network devices in at least two serving cells and at least two terminal devices.

System architectures and service scenarios described in the embodiments of this application are intended to more clearly describe the technical solutions of the embodiments of this application, but constitute no limitation on the technical solutions provided in the embodiments of this application. Specifically, the wireless communications system in the embodiments of this application may be, for example, 5G.

The network device mentioned in the embodiments of this application is a communications device deployed in a radio access network to provide a terminal device with a wireless communications function. The network device may include a macro base station, a micro base station (also referred to as a small cell), a relay node, a transmission/reception point (transmission/reception point, TRP), and the like in various forms. In systems using different radio access technologies, a name of a device having functions of the network device may vary. For ease of description, in all the embodiments of this application, the foregoing communications devices that provide the terminal device with the wireless communications function are collectively referred to as network devices.

The terminal device in the embodiments of this application may include various handheld devices, in-vehicle devices, wearable devices, or computing devices that have the wireless communications function, or another processing device connected to a wireless modem. The terminal device may also be referred to as a mobile station (mobile station, MS), user equipment (user equipment, UE), or terminal equipment (terminal equipment). The terminal device may alternatively include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal device, and the like. For ease of description, in all the embodiments of this application, the devices mentioned above are collectively referred to as terminal devices.

It needs to be noted that, the quantity and type of the terminal devices included in the communications system shown in FIG. 1 are merely for an illustration purpose, and the embodiments of this application are not limited thereto.

Uplink transmission of a terminal device causes cross interference to downlink reception of another device, and the terminal device and the another device are located in different serving cells. In the prior art, the cross interference is not considered during control of uplink transmit power of the terminal device. As a result, the prior art cannot meet requirements of future mobile communications, affecting system performance.

An embodiment of this application provides an uplink power control method. In this embodiment of this application, a terminal device receives power control indication information sent by a network device, where the power control indication information indicates a first power offset set, and the first power offset set is any one of at least two power offset sets. The terminal device receives a transmit power control (Transmit Power Control, TPC) command sent by the network device, determines a first offset indicated by the TPC from the first power offset set, and determines uplink transmit power based on the first offset. In this embodiment of this application, description is made by using an example in which the power control indication information is carried in a radio resource control (Radio Resource Control, RRC) message.

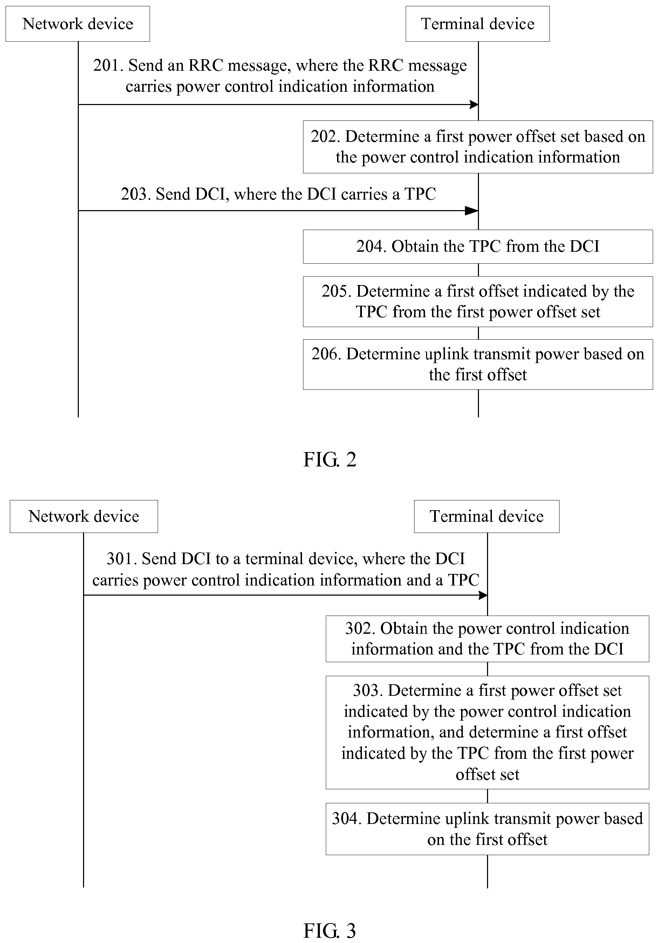

As shown in FIG. 2, the method includes the following steps.

Step 201: A network device determines power control indication information, and sends an RRC message to a terminal device, where the RRC message carries the power control indication information, the power control indication information indicates a first power offset set, and the first power offset set is any one of at least two power offset sets.

The at least two power offset sets are determined by the network device based on at least two interference intensity levels of cross interference of the terminal device to another terminal device, the cross interference is interference caused by uplink transmission of the terminal device to downlink reception of the another terminal device, a cell on which the terminal device camps is a serving cell, and a cell on which the another terminal device camps is a neighboring cell of the serving cell.

The uplink transmission of the terminal device causes the cross interference to the downlink reception of the another terminal device, and the terminal device and the another terminal device are located in different serving cells. In this embodiment of this application, the network device determines the power control indication information, adds the power control indication information to the RRC message, and sends the RRC message to the terminal device, so that when determining uplink transmit power, the terminal device selects a first offset from the power offset set indicated by the power control indication information, and determines the uplink transmit power based on the first offset. In this way, impact of the cross interference to the another terminal device is reflected in the uplink transmit power of the terminal device. This ensures transmission performance of the terminal device, and further alleviates the interference to the downlink reception of the another terminal device.

When the network device determines the power control indication information, the network device may determine the power control indication information based on information exchange between network devices, in other words, by using the following first implementation; or the network device may determine the power control indication information based on information that is reported by the terminal device, in other words, by using the following second implementation.

For the first implementation, a step in which the network device determines the power control indication information may be:

the network device receives interactive information sent by a network device in a neighboring cell, and determines the power control indication information based on the interactive information.

The interactive information includes resource scheduling information. The network device determines an interference intensity level of cross interference between the terminal device and another terminal device based on the interactive information, and determines the power control indication information based on the interference intensity level.

A step in which the network device determines the interference intensity level of the cross interference between the terminal device and the another terminal device based on the interactive information may be:

the network device obtains resource scheduling information of the terminal device, determines an overlapping ratio of scheduled resources of the terminal device to scheduled resources of the another terminal device based on the resource scheduling information of the terminal device and the resource scheduling information that is included in the interactive information, and determines the cross interference intensity level based on the overlapping ratio.

A step in which the network device determines the power control indication information based on the interference intensity level may be:

the network device obtains, from a mapping relationship between an interference intensity level and power control indication information based on the interference intensity level, power control indication information corresponding to the interference intensity level; or

the network device determines, based on the interference intensity level and a transformation function, power control indication information corresponding to the interference intensity level, where the transformation function is a transformation function used to transform an interference intensity level into power control indication information; or

the network device determines, based on the interference intensity level, an interference intensity level range to which the interference intensity level belongs; and obtains, from a correspondence between an interference intensity level range and power control indication information based on the interference intensity level range to which the interference intensity level belongs, power control indication information corresponding to the interference intensity level.

For the second implementation, a step in which the network device determines the power control indication information may be:

the network device receives cross interference measurement report information sent by the terminal device, and determines the power control indication information based on the cross interference measurement report information, where the report information indicates an intensity level of cross interference caused by uplink transmission of the terminal device to downlink reception of another terminal device, and the intensity level of the cross interference is determined by the terminal device based on reference signal received power (Reference Signal Received Power, RSRP) of a sensing signal or measurement signal that is sent between the terminal device and the another terminal device.

For example, the RRC information carries P_mode, and P_mode is the power control indication information. In addition, the power control indication information is 1-bit information or multi-bit information. For example, when the power control indication information is 1 bit, P_mode carried in the RRC message may be a Boolean variable. When the power control indication information is 0, the power control indication information indicates that a TPC is located in a power offset set 0. When the power control indication information is 1, the power control indication information indicates that a TPC is located in a power offset set 1. For another example, when the power control indication information is 2 bits, the power control indication information may indicate four cases. When the power control indication information is 00, the power control indication information indicates that a TPC is located in a power offset set 0. When the power control indication information is 01, the power control indication information indicates that a TPC is located in a power offset set 1. When the power control indication information is 10, the power control indication information indicates that a TPC is located in a power offset set 3. When the power control indication information is 11, the power control indication information indicates that a TPC is located in a power offset set 4. In other words, when the power control indication information is 2 bits, the power control indication information may indicate four cases in which the TPC is located in the power offset sets 0, 1, 2, and 3 respectively.

Step 202: The terminal device receives the RRC message sent by the network device, obtains the power control indication information from the RRC message, and determines the first power offset set based on the power control indication information.

A physical uplink control channel corresponds to at least two power offset sets, and a physical uplink shared channel corresponds to at least two power offset sets. Therefore, this step may be:

if a physical uplink channel is a physical uplink control channel, the terminal device determines, from at least two power offset sets corresponding to the physical uplink control channel, the first power offset set indicated by the power control indication information; or

if a physical uplink channel is a physical uplink shared channel, the terminal device determines, from at least two power offset sets corresponding to the physical uplink shared channel, the first power offset set indicated by the power control indication information.

When the terminal device determines the uplink transmit power, the network device further needs to send downlink control information (Downlink Control Information, DCI) to the terminal device by performing the following step 203, where different DCI formats correspond to different power offset sets. Therefore, alternatively, the step in which the terminal device determines the first power offset set based on the power control indication information may be:

the terminal device obtains, based on a type of a physical uplink channel and a format of the DCI, at least two power offset sets corresponding to the type of the physical uplink channel and the format of the DCI; and determines, based on the power control indication information, the first power offset set indicated by the power control indication information from the at least two power offset sets corresponding to the type of the physical uplink channel and the format of the DCI.

If the physical uplink channel is a physical uplink control channel, the format of the DCI may be a format 1A/1B/1D/1/2A/2B/2C/2D/2/3, or a format 3A; or if the physical uplink channel is a physical uplink shared channel, the format of the DCI may be a format 0/3/4, or a format 3A.

In this embodiment of this application, description is made by using an example in which there are only two cases for P mode. There may be four, eight, or even more cases for P mode.

For example, if the physical uplink channel is a physical uplink control channel and the format of the DCI is the format 1A/1B/1D/1/2A/2B/2C/2D/2/3, the at least two power offset sets are shown in Table 1 below.

**Table 1**

|  | P_mode = 0 | P_mode = 1 |
|---|---|---|
| TPC | Power offset | Power offset |
| 0 | -1 | -4 |
| 1 | 0 | -3 |
| 2 | 1 | -2 |
| 3 | 3 | 0 |

When the physical uplink channel is a physical uplink control channel and the format of the DCI is the format 1A/1B/1D/1/2A/2B/2C/2D/2/3, if P_mode is 0, the terminal device selects a power offset set in the first column based on the power control indication information; or if P_mode is 1, the terminal device selects a power offset set in the second column based on the power control indication information.

For another example, if the physical uplink channel is a physical uplink control channel and the format of the DCI is the format 3A, the at least two power offset sets are shown in Table 2 below.

**Table 2**

|  | P_mode = 0 | P_mode = 1 |
|---|---|---|
| TPC | Power offset | Power offset |
| 0 | -1 | -4 |
| 1 | 1 | -3 |

When the physical uplink channel is a physical uplink control channel and the format of the DCI is the format 3A, if P_mode is 0, the terminal device selects a power offset set in the first column based on the power control indication information; or if P_mode is 1, the terminal device selects a power offset set in the second column based on the power control indication information.

For another example, if the physical uplink channel is a physical uplink shared channel and the format of the DCI is the format 3A, the at least two power offset sets are shown in Table 3 below.

**Table 3**

|  | P_mode = 0 | P_mode = 1 |
|---|---|---|
| TPC | Power offset | Power offset |
| 0 | -1 | -4 |
| 1 | 1 | -2 |

When the physical uplink channel is a physical uplink shared channel and the format of the DCI is the format 3A, if P_mode is 0, the terminal device selects a power offset set in the first column based on the power control indication information; or if P_mode is 1, the terminal device selects a power offset set in the second column based on the power control indication information.

When the physical uplink channel is a physical uplink shared channel and the format of the DCI is the format 0/3/4, different offset calculation modes correspond to different power offset sets. Therefore, if the physical uplink channel is a physical uplink shared channel and the format of the DCI is the format 0/3/4, alternatively, the step in which the terminal device determines the first power offset set based on the power control indication information may be:

the terminal device determines, based on the power control indication information and an offset calculation mode, a first power offset set corresponding to the power control indication information and the offset calculation mode from the at least two power offset sets.

The offset calculation mode may be an accumulated (Accumulated) mode or an absolute (Absolute) mode.

For example, if the physical uplink channel is a physical uplink shared channel and the format of the DCI is the format 0/3/4, the at least two power offset sets are shown in Table 4 below.

**Table 4**

|  | P_mode = 0 | P_mode = 1 | P_mode = 0 | P_mode = 1 |
|---|---|---|---|---|
| TPC | Power offset set in the accumulated mode | Power offset set in the absolute mode | Power offset set in the accumulated mode | Power offset set in the absolute mode |
| 0 | -1 | -4 | -4 | -7 |
| 1 | 0 | -1 | -3 | -4 |
| 2 | 1 | 1 | -2 | -2 |
| 3 | 3 | 4 | 0 | 1 |

When the offset calculation mode is the accumulated mode and the power control indication information is 0, the terminal device selects a power offset set in the first column; or when the offset calculation mode is the accumulated mode and the power control indication information is 1, the terminal device selects a power offset set in the third column; or when the offset calculation mode is the absolute mode and the power control indication information is 0, the terminal device selects a power offset set in the second column; or when the offset calculation mode is the absolute mode and the power control indication information is 1, the terminal device selects a power offset set in the fourth column.

Step 203: The network device determines a TPC and sends DCI to the terminal device, where the DCI carries the TPC, and the TPC indicates a first offset in the first power offset set.

The network device adds the TPC to the DCI and sends the DCI to the terminal device, and then step 204 is performed.

It needs to be noted that there is no strict time sequence for step 201 and step 203. Step 201 and step 202 may be performed before step 203 and step 204; or step 203 and step 204 may be performed before step 201 and step 202. In this embodiment of this application, an execution time sequence of step 201 and step 203 is not specifically limited.

Step 204: The terminal device receives the DCI sent by the network device, and obtains the TPC from the DCI.

Step 205: The terminal device determines, based on the TPC, the first offset indicated by the TPC from the first power offset set.

The first power offset set stores a correspondence between a TPC and an offset; and correspondingly, this step may be:

the terminal device determines, from the correspondence between a TPC and an offset based on the TPC, a first offset corresponding to the TPC.

Step 206: The terminal device determines uplink transmit power based on the first offset.

This step may be implemented by the following steps 2061 and 2062.

2061: The terminal device obtains a transmit power adjustment amount based on the first offset.

The terminal device obtains the transmit power adjustment amount based on the offset calculation mode and the first offset.

The offset calculation mode may be the absolute mode or the accumulated mode. Then, a step in which the terminal device obtains the transmit power adjustment amount based on the offset calculation mode and the first offset may be:

if the offset calculation mode is the absolute mode, the terminal device uses the first offset as the transmit power adjustment amount; or

if the offset calculation mode is the accumulated mode, the terminal device obtains an adjustment amount of a previous uplink transmission timeslot, and uses a sum of the adjustment amount of the previous uplink transmission timeslot and the first offset as the transmit power adjustment amount.

For example, if control information is transmitted between the terminal device and the network device through a physical uplink control channel, the offset (P_CLI) is -3 dB; and when the offset calculation mode is the absolute mode, the transmit power adjustment amount $g(i) = P\_CLI = -3$ dB.

For another example, if data information is transmitted between the terminal device and the network device through a physical uplink shared channel, the offset (P_CLI) is -3 dB; and when the offset calculation mode is the absolute mode, the transmit power adjustment amount $f(i) = P\_CLI = -3$ dB; or when the offset calculation mode is the accumulated mode, the transmit power adjustment amount $f(i) = f(i - 1) + P\_CLI = f(i - 1) - 3$ dB.

2062: The terminal device determines the uplink transmit power based on the adjustment amount.

If control information is transmitted between the terminal device and the network device through a physical uplink control channel and the format of the DCI is the format 1A/1B/1D/1/2A/2B/2C/2D/2/3, transmit power of the physical uplink control channel may be determined in the following first manner in this step; or if control information is transmitted between the terminal device and the network device through a physical uplink control channel and the format of the DCI is a format 4/5, transmit power of the physical uplink control channel may be determined in the following second manner in this step; or if data information is transmitted between the terminal device and the network device through a physical uplink shared channel, transmit power of the physical uplink shared channel may be determined in the following third manner in this step; or if data information is transmitted between the terminal device and the network device through a physical uplink shared channel, and control information is transmitted between the terminal device and the network device through a physical uplink control channel, transmit power of the physical uplink shared channel may be determined in the following fourth manner in this step. If sounding reference signal (Sounding Reference Signal, SRS) information is transmitted between the terminal device and the network device through an SRS channel, this step may be implemented in the following fifth manner.

For the first implementation, when the terminal device determines the uplink transmit power based on the adjustment amount, the terminal device further needs to obtain maximum transmit power $P_{CMAX,c}(i)$ of the terminal device, transmit power $P_{o\_PUCCH}$ that the network device expects to receive and that is of a physical uplink control channel, a downlink path loss estimate $PL_c$, a first power parameter value $h(n_{CQI}, n_{HARQ}, n_{SR})$ corresponding to a third preset format, a second power parameter value $\Delta_{F\_PUCCH}(F)$ that is configured by the network device for the terminal device and that is of the physical uplink control channel, and a third power parameter value $\Delta_{TxD}(F')$ that is configured by the network device for the terminal device and that is of the physical uplink control channel; and correspondingly, the step in which the terminal device determines the uplink transmit power based on the adjustment amount may be:

the terminal device determines transmit power of the physical uplink control channel based on $P_{CMAX,c}(i)$, $P_{o\_PUCCH}$,

$PL_c$, $h(n_{CQI}, n_{HARQ}, n_{SR})$, $\Delta_{F\_PUCCH}(F)$, $\Delta_{TxD}(F')$, and the adjustment amount.

It needs to be noted that, in this embodiment of this application, the terminal device determines the transmit power of the physical uplink control channel based on at least $P_{CMAX,c}(i)$, $P_{0\_PUCCH}$, $PL_c$, $h(n_{CQI}, n_{HARQ}, n_{SR})$, $\Delta_{F\_PUCCH}(F)$, $\Delta_{TxD}(F')$, and the adjustment amount. Alternatively, the terminal device may determine the transmit power of the physical uplink control channel in combination with another power control parameter. In addition, in this embodiment of this application, a specific calculation formula used by the terminal device to determine the transmit power of the physical uplink control channel based on $P_{CMAX,c}(i)$, $P_{0\_PUCCH}$, $PL_c$, $h(n_{CQI}, n_{HARQ}, n_{SR})$, $\Delta_{F\_PUCCH}(F)$, $\Delta_{TxD}(F')$, and the adjustment amount is not specifically limited. For example, the terminal device determines the transmit power of the physical uplink control channel based on $P_{CMAX,c}(i)$, $P_{0\_PUCCH}$, $PL_c$, $h(n_{CQI}, n_{HARQ}, n_{SR})$, $\Delta_{F\_PUCCH}(F)$, $\Delta_{TxD}(F')$, and the adjustment amount by using a formula 1 below.

Formula 1:
$$P_{\text{PUCCH}}(i) = \min\left\{ \begin{array}{l} P_{\text{CMAX,c}}(i), \\ P_{0\_\text{PUCCH}} + PL_c + h\left(n_{CQI}, n_{HARQ}, n_{SR}\right) + \Delta_{\text{F\_PUCCH}}\left(F\right) + \Delta_{TxD}\left(F'\right) + g\left(i\right) \end{array} \right\},$$

where $P_{\text{PUCCH}}(i)$ is the transmit power of the physical uplink control channel, and $g(i)$ is the adjustment amount.

It needs to be noted that, when the terminal device is configured to transmit a physical uplink control channel on two antenna ports, $\Delta_{TxD}(F')$ is configured by using a higher layer parameter; and in other cases, $\Delta_{TxD}(F') = 0$. $n_{CQI}$ is an information bit of channel quality information (channel quality information, CQI). $n_{SR} = 1$ or $n_{SR} = 0$. In addition, when an $i^{th}$ transmission subframe is configured only to transmit data for a physical uplink control channel of the terminal device, $n_{SR} = 1$; and in other cases, $n_{SR} = 0$. $n_{HARQ}$ is a parameter related to hybrid automatic repeat request-acknowledgement message (Hybrid Automatic Repeat request-Acknowledgement, HARQ-ACK) bits.

$P_{0\_PUCCH} = P_{0\_UE\_PUCCH} + P_{0\_NOMINAL\_PUCCH}$, where $P_{0\_UE\_PUCCH}$ is a specific power parameter that is of the terminal device and that is configured by using higher layer signaling, and $P_{0\_NOMINAL\_PUCCH}$ is a specific power parameter that is of a first cell and that is configured by using higher layer signaling.

For the second implementation, when the terminal device determines the uplink transmit power based on the adjustment amount, the terminal device further needs to obtain maximum transmit power $P_{CMAX,c}(i)$ of the terminal device, transmit power $P_{0\_PUCCH}$ that the network device expects to receive and that is of a physical uplink control channel, a downlink path loss estimate $PL_c$, a quantity $M_{PUSCH,c}(i)$ of resource blocks (Resource Block, RB) allocated by the network device to the terminal device during transmission of the physical uplink control channel, an offset $\Delta_{TF,c}(i)$ related to a modulation and coding scheme (Modulation and coding scheme, MCS), and a second power parameter value $\Delta_{F\_PUCCH}(F)$ that is configured by the network device for the terminal device and that is of the physical uplink control channel; and correspondingly, the step in which the terminal device determines the uplink transmit power based on the adjustment amount may be:

the terminal device determines transmit power of the physical uplink control channel based on $P_{CMAX,c}(i)$, $P_{0\_PUCCH}$, $PL_c$, $M_{PUCCH,c}(i)$, $\Delta_{TF,c}(i)$, $\Delta_{F\_PUCCH}(F)$, and the adjustment amount.

It needs to be noted that, in this embodiment of this application, the terminal device determines the transmit power of the physical uplink control channel based on at least $P_{CMAX,c}(i)$, $P_{0\_PUCCH}$, $PL_c$, $M_{PUCCH,c}(i)$, $\Delta_{TF,c}(i)$, $\Delta_{F\_PUCCH}(F)$, and the adjustment amount. Alternatively, the terminal device may determine the transmit power of the physical uplink control channel in combination with another power control parameter. In addition, in this embodiment of this application, a specific calculation formula used by the terminal device to determine the transmit power of the physical uplink control channel based on $P_{CMAX,c}(i)$, $P_{0\_PUCCH}$, $PL_c$, $M_{PUCCH,c}(i)$, $\Delta_{TF,c}(i)$, $\Delta_{F\_PUCCH}(F)$, and the adjustment amount is not specifically limited. For example, the terminal device determines the transmit power of the physical uplink control channel based on $P_{CMAX,c}(i)$, $P_{0\_PUCCH}$, $PL_c$, $M_{PUCCH,c}(i)$, $\Delta_{TF,c}(i)$, $\Delta_{F\_PUCCH}(F)$, and the adjustment amount by using a formula 2 below.

Formula 2:
$$P_{\text{PUCCH}}(i) = \min\left\{ \begin{array}{l} P_{\text{CMAX,c}}(i), \\ P_{0\_\text{PUCCH}} + PL_c + 10\log_{10}\left(M_{\text{PUCCH,c}}(i)\right) + \Delta_{\text{TF,c}}\left(i\right) + \Delta_{\text{F\_PUCCH}}\left(F\right) + g\left(i\right) \end{array} \right\},$$

where $P_{\text{PUCCH}}(i)$ is the transmit power of the physical uplink control channel, $g(i)$ is the adjustment amount, and i is a subframe identifier.

For the third implementation, when the terminal device determines the uplink transmit power based on the adjustment amount, the terminal device further needs to obtain maximum transmit power $P_{CMAX,c}(i)$ of the terminal device, a quantity $M_{PUSCH,c}(i)$ of RBs allocated by the network device to the terminal device during transmission of a physical uplink shared channel, transmit power $P_{0\_PUSCH}(j)$ that the network device expects to receive and that is of the physical uplink shared channel, a path loss compensation factor $\alpha_c(i)$ , a downlink path loss estimate $PL_c$, and an offset $\Delta_{TF,c}(i)$ related to an MCS; and correspondingly, the step in which the terminal device determines the uplink transmit power based on the adjustment amount may be:

the terminal device determines transmit power of the physical uplink shared channel based on $P_{CMAX,c}(i)$, $M_{PUSCH,c}(i)$, $P_{o\_PUSCH}(j)$, $\alpha_c(i)$, $PL_c$, $\Delta_{TF,c}(i)$, and the adjustment amount.

It needs to be noted that, in this embodiment of this application, the terminal device determines the transmit power of the physical uplink shared channel based on at least $P_{CMAX,c}(i)$, $M_{PUSCH,c}(i)$, $P_{o\_PUSCH}$, $\alpha_c(i)$, $PL_c$, $\Delta_{TF,c}(i)$, and the adjustment amount. Alternatively, the terminal device may determine the transmit power of the physical uplink shared channel in combination with another power control parameter. In addition, in this embodiment of this application, a specific calculation formula used by the terminal device to determine the transmit power of the physical uplink shared channel based on $P_{CMAX,c}(i)$, $M_{PUSCH,c}(i)$, $P_{o\_PUSCH}$, $\alpha_c(i)$, $PL_c$, $\Delta_{TF,c}(i)$, and the adjustment amount is not specifically limited. For example, the terminal device determines the transmit power of the physical uplink shared channel based on $P_{CMAX,c}(i)$, $M_{PUSCH,c}(i)$, $P_{o\_PUSCH}$, $\alpha_c(i)$, $PL_c$, $\Delta_{TF,c}(i)$, and the adjustment amount by using a formula 3 below.

Formula 3:
$$P_{\mathrm{PUSCH},c}(i) = \min\left\{ \begin{array}{l} P_{\mathrm{CMAX},c}(i), \\ 10\log_{10}(M_{\mathrm{PUSCH},c}(i)) + P_{\mathrm{O\_PUSCH},c}(j) + \alpha_c(j)\cdot PL_c + \Delta_{\mathrm{TF},c}(i) + f_c(i) \end{array} \right\},$$

where $P_{PUSCH,c}(i)$ is the transmit power of the physical uplink shared channel, and $f_c(i)$ is the adjustment amount.

It needs to be noted that $P_{o\_PUSCH}(j) = P_{o\_UE\_PUSCH}(j) + P_{o\_NOMINAL\_PUSCH}(j)$, where $P_{o\_UE\_PUSCH}(j)$ is a specific power parameter that is of the terminal device and that is configured by using higher layer signaling, and $P_{o\_NOMINAL\_PUSCH}(j)$ is a specific power parameter that is of a first cell and that is configured by using higher layer signaling. The specific power parameter that is of the terminal device and that is configured by using the higher layer signaling and the specific power parameter that is of the first cell and that is configured by using the higher layer signaling are shown as follows:

```
UplinkPowerControlCommon ::=        SEQUENCE {
    p0-NominalPUSCH                     INTEGER (-126..24),
    alpha                               Alpha-r12,
    p0-NominalPUCCH                     INTEGER (-127..-96),
    deltaFList-PUCCH                    DeltaFList-PUCCH,
    deltaPreambleMsg3                   INTEGER (-1..6)
}
```

$$\Delta_{TF,c}(i) = 10\log_{10}\left( \left( 2^{BPRE\cdot K_s} - 1 \right) \cdot \beta_{offset}^{PUSCH} \right)$$
. There are only two cases: $K_S = 0$ , and $K_S = 1.25$. A specific value of $K_S$ is configured by using a higher layer parameter deltaMCS-Enabled. A specific configuration is as follows:

UplinkPowerControl information elements

UplinkPowerControlDedicated ::=    SEQUENCE {

    p0-UE-PUSCH    INTEGER (-8..7),

    deltaMCS-Enabled    ENUMERATED {en0, en1},

    accumulationEnabled    BOOLEAN,

    p0-UE-PUCCH    INTEGER (-8..7),

    pSRS-Offset    INTEGER (0..15),

    filterCoefficient    FilterCoefficient    DEFAULT fc4

}

For control information transmitted through a physical uplink data channel without data and control multiplexing (UL-SCH) data, $BPRE=O_{CQI}/ N_{RE}$ and $$BPRE = \sum_{r=0}^{C-1} K_r / N_{RE}$$ , where $C$ is a quantity of code blocks (code block), $K_r$ is a size of a code block $r$, and $O_{CQI}$ is a quantity of CQI/precoding matrix indicator (Precoding Matrix Indicator, PMI) bits including cyclic redundancy check (Cyclic Redundancy Check, CRC) check bits. $N_{RE}$ is a quantity of resource elements REs (Resource elements), and $N_{RE} = M_{sc}^{PUSCH-initial} \cdot N_{symb}^{PUSCH\text{-}initial}$ . $N_{symb}^{PUSCH\text{-}initial}$ is a quantity of single-carrier frequency-division multiple access (Single-carrier Frequency-Division Multiple Access, SC-FDMA) symbols that carry physical uplink shared channel data in an initial transmission subframe of a physical uplink shared channel. $M_{sc}^{PUSCH-initial}$ is a quantity of subcarriers that are scheduled and allocated in the initial transmission subframe of the physical uplink shared channel. For control data transmitted through a physical uplink shared channel without UL_SCH data transmission, $\beta_{offset}^{PUSCH} = \beta_{offset}^{CQI}$ ; and in other cases, $\beta_{offset}^{PUSCH}$ is 1.

For the fourth implementation, when the terminal device determines the uplink transmit power based on the adjustment amount, the terminal device further needs to obtain a linear value $\hat{P}_{CMAX,c}(i)$, of A maximum transmit power of the terminal device, a linear value $\hat{P}_{PUCCH}(i)$ of transmit power of a physical uplink control channel, a quantity $M_{PUSCH,c}(i)$ of RBs allocated by the network device to the terminal device during transmission of a physical uplink control channel, transmit power $P_{o\_PUSCH}(j)$ that the network device expects to receive and that is of the physical uplink shared channel, a path loss compensation factor $\alpha_c(i)$, a downlink path loss estimate $PL_c$, and an offset $\Delta_{TF,c}(i)$ related to an MCS; and correspondingly, the step in which the terminal device determines the uplink transmit power based on the adjustment amount may be:

the terminal device determines transmit power of the physical uplink shared channel based on $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF,\,c}(i)$, and the adjustment amount.

It needs to be noted that, in this embodiment of this application, the terminal device determines the transmit power of the physical uplink shared channel based on at least $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF,\,c}(i)$, and the adjustment amount. Alternatively, the terminal device may determine the transmit power of the physical uplink shared channel in combination with another power control parameter. In addition, in this embodiment of this application, a specific calculation formula used by the terminal device to determine the transmit power of the physical uplink shared channel based on $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF,\,c}(i)$, and the adjustment amount is not specifically limited. For example, the terminal device determines the transmit power of the physical uplink shared channel based on $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF,\,c}(i)$, and the adjustment amount by using a formula 4 below.

Formula 4:
$$P_{PUSCH,c}(i) = \min \left\{ \begin{array}{l} 10\log_{10}\left( \hat{P}_{CMAX,c}(i) - \hat{P}_{PUCCH}(i) \right), \\ 10\log_{10}(M_{PUSCH,c}(i)) + P_{O\_PUSCH,c}(j) + \alpha_c(j) \cdot PL_c + \Delta_{TF,c}(i) + f_c(i) \end{array} \right\},$$

where $P_{PUSCH,c}(i)$ is the transmit power of the physical uplink shared channel, and $f_c(i)$ is the adjustment amount.

For the fifth implementation, when the terminal device determines the uplink transmit power based on the adjustment amount, the terminal device further needs to obtain maximum transmit power $P_{CMAX,c}(i)$ of the terminal device, transmit power $P_{SRS\_OFFSET,c}(m)$ that the network device expects to receive and that is of an SRS channel, a quantity $M_{SRS,c}$ of RBs allocated by the network device to the terminal device during transmission of the SRS channel, a quantity $M_{PUSCH,c}(j)$ of RBs allocated by the network device to the terminal device during transmission of a physical uplink control channel, a downlink path loss estimate $PL_c$, and a path loss compensation factor $\alpha_c(i)$; and correspondingly, the step in which the terminal device determines the uplink transmit power based on the adjustment amount may be: the terminal device determines transmit power of the uplink SRS channel based on $P_{CMAX,c}(i)$, $P_{SRS\_OFFSET,c}(m)$, $M_{SRS,c}$, $M_{PUSCH,c}(j)$, $PL_c$, $\alpha_c(i)$, and the adjustment amount.

The terminal device determines the transmit power of the uplink SRS channel based on $P_{CMAX,c}(i)$, $P_{SRS\_OFFSET,c}(m)$, $M_{SRS,c}$, $M_{PUSCH,c}(j)$, $PL_c$, $\alpha_c(i)$, and the adjustment amount by using a formula 13 below.

Formula 13:

$$P_{SRS,c}(i) = \min\left\{ P_{CMAX,c}(i), P_{SRS\_OFFSET,c}(m) + 10\log_{10}(M_{SRS,c}) + P_{O\_PUSCH,c}(j) + \alpha_c(j) \cdot PL_c + f_c(i) \right\},$$

where $P_{SRS,c}(i)$ is the transmit power of the uplink SRS channel, and $f_c(i)$ is the adjustment amount.

In this embodiment of this application, cross interference between the terminal device and another terminal device is considered. Therefore, at least two power offset sets are configured. During uplink power control, the terminal device determines, based on the power control indication information, the first power offset set indicated by the power control indication information from the at least two power offset sets; and then determines the first offset from the first power offset set based on the TPC, and determines the uplink transmit power based on the first offset. Because impact of the cross interference is considered in determining the uplink transmit power, the method can be applied to a new radio access technology (New RAT, NR) or 5G. In addition, cross interference to another terminal device is alleviated when the uplink transmit power is determined according to the foregoing method.

An embodiment of this application provides an uplink power control method. In this embodiment of this application, a terminal device receives power control indication information sent by a network device, where the power control indication information indicates a first power offset set, and the first power offset set is any one of at least two power offset sets; and the terminal device receives a transmit power control (Transmit Power Control, TPC) command sent by the network device, determines a first offset indicated by the TPC from the first power offset set, and determines uplink transmit power based on the first offset. In this embodiment of this application, the network device adds the power control indication information to DCI, and sends the DCI to the terminal device; and the terminal device determines the uplink transmit power based on the power control indication information.

As shown in FIG. 3, the method includes the following steps.

Step 301: A network device determines power control indication information and a TPC, and sends DCI to a terminal device, where the DCI carries the power control indication information and the TPC.

A process in which the network device determines the power control indication information is the same as the process in which the network device determines the power control indication information in step 201, and details are not described herein again. A process in which the network device determines the TPC is the same as the process in which the network device determines the TPC in step 203, and details are not described herein again.

Step 302: The terminal device receives the DCI sent by the network device, and obtains the power control indication information and the TPC from the DCI.

Step 303: The terminal device determines a first power offset set based on the power control indication information, and determines, based on the TPC, a first offset indicated by the TPC from the first power offset set.

A process in which the terminal device determines the first power offset set based on the power control indication information is the same as the process in which the terminal device determines the first power offset set based on the power control indication information in step 202. A process in which the terminal device determines, based on the TPC, the first offset indicated by the TPC from the first power offset set is the same as the process in which the network device determines, based on the TPC, the first offset indicated by the TPC from the first power offset set in step 205, and details are not described herein again.

Step 304: The terminal device determines uplink transmit power based on the first offset.

A process in which the terminal device determines the uplink transmit power based on the first offset is the same as the process in which the terminal device determines the uplink transmit power based on the first offset in step 206, and details are not described herein again.

In this embodiment of this application, cross interference between the terminal device and another terminal device is considered. Therefore, at least two power offset sets are configured. During uplink power control, the terminal device determines, based on the power control indication information, the first power offset set indicated by the power control indication information from the at least two power offset sets; and then determines the first offset from the first power offset set based on the TPC, and determines the uplink transmit power based on the first offset. Because impact of the cross interference is considered in determining the uplink transmit power, the method can be applied to an NR or 5G. In addition, cross interference to another terminal device is alleviated when the uplink transmit power is determined according to the foregoing method.

An embodiment of this application provides an uplink power control method. In this embodiment of this application, a terminal device receives power control indication information sent by a network device, where the power control indication information indicates a first power offset set, and the first power offset set is any one of at least two power offset sets; and the terminal device receives a transmit power control (Transmit Power Control, TPC) command sent by the network device, determines a first offset indicated by the TPC from the first power offset set, and determines uplink transmit power based on the first offset. In this embodiment of this application, the network device adds the power control indication information to a TPC in DCI, and sends the DCI to the terminal device; and the terminal device determines the uplink transmit power based on the power control indication information.

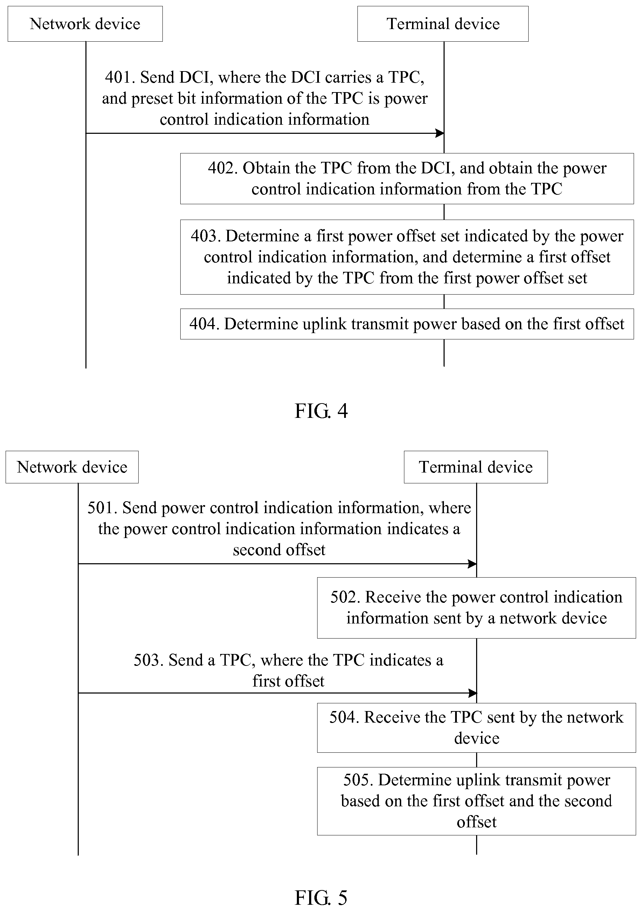

As shown in FIG. 4, the method includes the following steps.

Step 401: A network device determines power control indication information and a TPC, and sends DCI to a terminal device, where the DCI carries the TPC, and preset bit information of the TPC is the power control indication information.

The preset bit information may be 1-bit information, or may include multi-bit information. In addition, the preset bit information may be information of a most significant bit or information of a least significant bit; or may be information of two most significant bits or information of two least significant bits. In this embodiment of this application, the preset bit information is not specifically limited.

Step 402: The terminal device receives the DCI sent by the network device, obtains the TPC from the DCI, and obtains the power control indication information from the TPC.

Step 403: The terminal device determines a first power offset set based on the power control indication information, and determines, based on the TPC, a first offset indicated by the TPC from the first power offset set.

A process in which the terminal device determines the first power offset set based on the power control indication information is the same as the process in which the terminal device determines the first power offset set based on the power control indication information in step 202. A process in which the terminal device determines, based on the TPC, the first offset indicated by the TPC from the first power offset set is the same as the process in which the network device determines, based on the TPC, the first offset indicated by the TPC from the first power offset set in step 205, and details are not described herein again.

Step 404: The terminal device determines uplink transmit power based on the first offset.

A process in which the terminal device determines the uplink transmit power based on the first offset is the same as the process in which the terminal device determines the uplink transmit power based on the first offset in step 206, and details are not described herein again.

In this embodiment of this application, cross interference between the terminal device and another terminal device is considered. Therefore, at least two power offset sets are configured. During uplink power control, the terminal device determines, based on the power control indication information, the first power offset set indicated by the power control indication information from the at least two power offset sets; and then determines the first offset from the first power offset set based on the TPC, and determines the uplink transmit power based on the first offset. Because impact of the cross interference is considered in determining the uplink transmit power, the method can be applied to an NR or 5G. In addition, cross interference to another terminal device is alleviated when the uplink transmit power is determined according to the foregoing method.

An embodiment of this application provides an uplink power control method. In this embodiment of this application, a network device directly determines power control indication information, where the power control indication information indicates a second offset; and the network device sends the power control indication information and a first offset to a terminal device, so that the terminal device determines uplink transmit power based on the first offset and the second offset.

As shown in FIG. 5, the method includes the following steps.

Step 501: A network device determines power control indication information, and sends the power control indication information to a terminal device, where the power control indication information indicates a second offset.

The second offset is determined by the network device based on a cross interference intensity level of cross interference of the terminal device to another terminal device, the cross interference is interference caused by uplink transmission of the terminal device to downlink reception of the another terminal device, a cell on which the terminal device camps is a serving cell, and a cell on which the another terminal device camps is a neighboring cell of the serving cell.

A step in which the network device determines the power control indication information may be:
the network device obtains an interference intensity level of cross interference, and obtains the power control indication information based on the interference intensity level.

When sending the power control indication information to the terminal device, the network device may add the power control indication information to an RRC message and/or DCI. For example, description is made by using an example in which there are two cases for the DCI. The DCI may be DCI used for uplink (Uplink, UL) or downlink (Downlink, DL) resource scheduling, or may be DCI dedicated for transmitting power control information.

If the network device adds the power control indication information to an RRC message, a parameter P_CLI (the second offset) is added to IE UplinkPowerControlDedicated in the protocol 36.331.

```
UplinkPowerControlDedicated ::=        SEQUENCE {
        P_CLI               ENUMERATED {0, -3},
        p0-UE-PUSCH              INTEGER (-8..7),
        deltaMCS-Enabled        ENUMERATED {en0, en1},
        accumulationEnabled         BOOLEAN,
        p0-UE-PUCCH             INTEGER (-8..7),
        pSRS-Offset         INTEGER (0..15),
        filterCoefficient           FilterCoefficient        DEFAULT fc4
        }
```

If the network device adds the power control indication information to DCI used for uplink or downlink resource scheduling, an indication information bit (the second offset) is added to a format of DCI carried on a physical downlink control channel (Physical Downlink Control Channel, PDCCH)/an enhanced physical downlink control channel EPDCCH (Enhanced Physical Downlink Control Channel, EPDCCH).
P_CLI indicator - 1 bit, where value 0 indicates P_CLI = 0 dB and value 1 indicates P_CLI = -3 dB

If the network device adds the power control indication information to DCI dedicated for transmitting power control information, a new DCI format X (DCI format 3/3A-Like) may be used.
DCI format X: - P CLI command number 1, P CLI command number 2, ..., P CLI command number N

CRC parity bits of the DCI format X are scrambled by using p_cli-RNTI. When the P_CLI parameter is 0 dB or -3 dB, the P_CLI command number 1 indicates 0 dB or -3 dB.

The parameter p_cli-Index provided by higher layers determines the index to the P_CLI command for a given UE.

Corresponding configurations in the RRC message are as follows:

```
PhysicalConfigDedicated ::= SEQUENCE {
        p_cli-PDCCH-ConfigPUCCHP_CLI-PDCCH-Config  OPTIONAL,       -- Need ON
        p_cli-PDCCH-ConfigPUSCH P_CLI-PDCCH-Config  OPTIONAL,      -- Need ON
        …
        }
P_CLI-PDCCH-Config ::=        CHOICE {
        release         NULL,
        setup           SEQUENCE {
        p_cli-RNTI      BIT STRING (SIZE (16)),
        p_cli-Index     P_CLI-Index
        }
```

It needs to be noted that, when the network device adds the power control indication information to DCI dedicated for transmitting power control information, the DCI may carry power control indication information of a plurality of terminal devices, and a second power offset to be received by the terminal device is determined based on a correspondence between a power control indication information field of the DCI and the terminal device.

Step 502: The terminal device receives the power control indication information sent by the network device.

If the network device adds the power control indication information to an RRC message, the step in which the terminal device receives the power control indication information sent by the network device may be:

the terminal device receives the RRC message sent by the network device, and obtains the power control indication information from the RRC message.

If the network device adds the power control indication information to DCI in an existing format, the step in which the terminal device receives the power control indication information sent by the network device may be:

the terminal device receives the DCI sent by the network device, and obtains the power control indication information from the DCI.

If the network device adds the power control indication information to DCI dedicated for transmitting power control information, the step in which the terminal device receives the power control indication information sent by the network device may be:

if the DCI carries power control indication information of a plurality of terminal devices, the terminal device obtains power control indication information of the terminal device from the DCI based on a correspondence between a device identifier of the terminal device and a power control indication information field of the DCI.

If the network device adds the power control indication information to both an RRC message and DCI, the step in which the terminal device receives the power control indication information sent by the network device may be:

the terminal device receives the RRC message and the DCI that are sent by the network device, and obtains the power control indication information from the RRC message or the DCI based on a priority of the RRC message and a priority of the DCI.

If the priority of the RRC message is higher than the priority of the DCI, the terminal device obtains the power control indication information from the RRC message; or if the priority of the DCI is higher than the priority of the RRC message, the terminal device obtains the power control indication information from the DCI.

Step 503: The network device determines a TPC, and sends the TPC to the terminal device.

Step 504: The terminal device receives the TPC sent by the network device.

Step 505: The terminal device determines uplink transmit power based on a first offset and the second offset.

This step may be implemented by the following steps 5051 and 5052.

5051: The terminal device obtains a transmit power adjustment amount based on the first offset.

5052: The terminal device determines the uplink transmit power based on the adjustment amount and the second offset.

If control information is transmitted between the terminal device and the network device through a physical uplink channel and a format of the DCI is a format 1A/1B/1D/1/2A/2B/2C/2D/2/3, transmit power of the physical uplink control channel may be determined in the following first manner in this step; or if control information is transmitted between the terminal device and the network device through a physical uplink control channel and a format of the DCI is a format 4/5, transmit power of the physical uplink control channel may be determined in the following second manner in this step; or if data information is transmitted between the terminal device and the network device through a physical uplink shared channel, transmit power of the physical uplink shared channel may be determined in the following third manner in this step; or if data information is transmitted between the terminal device and the network device through a physical uplink shared channel, and control information is transmitted between the terminal device and the network device through a physical uplink control channel, transmit power of the physical uplink shared channel may be determined in the following fourth manner in this step. If SRS information is transmitted between the terminal device and the network device through an SRS channel, this step may be implemented in the following fifth manner.

For the first implementation, when the terminal device determines the uplink transmit power based on the adjustment amount and the second offset, the terminal device further needs to obtain maximum transmit power $P_{CMAX,c}(i)$, transmit power $P_{o\_PUCCH}$ that the network device expects to receive and that is of an uplink control channel, a downlink path loss estimate $PL_c$, a first power parameter value $h(n_{CQI}, n_{HARQ}, n_{SR})$ corresponding to a third preset format, a second power parameter value $\Delta_{F\_PUCCH}(F)$ that is configured by the network device for the terminal device and that is of the physical uplink control channel, and a third power parameter value $\Delta_{TxD}(F')$ that is configured by the network device for the terminal device and that is of the physical uplink control channel; and correspondingly, the step in which the terminal device determines the uplink transmit power based on the adjustment amount and the second offset may be:

the terminal device determines transmit power of the physical uplink control channel based on $P_{CMAX,c}(i)$, $P_{o\_PUCCH}$, $PL_c$, $h(n_{CQI}, n_{HARQ}, n_{SR})$, $\Delta_{F\_PUCCH}(F)$, $\Delta_{TxD}(F')$, the adjustment amount, and the second offset.

It needs to be noted that, in this embodiment of this application, the terminal device determines the transmit power of the physical uplink control channel based on at least $P_{CMAX,c}(i)$, $P_{o\_PUCCH}$, $PL_c$, $h(n_{CQI}, n_{HARQ}, n_{SR})$, $\Delta_{F\_PUCCH}(F)\Delta_{TxD}(F')$, the adjustment amount, and the second offset. Alternatively, the terminal device may determine the transmit power of the physical uplink control channel in combination with another power control parameter. In addition, in this embodiment of this application, a specific calculation formula used by the terminal device to determine the transmit power of the physical uplink control channel based on $P_{CMAX,c}(i)$, $P_{0\_PUCCH}$, $PL_c$, $h(n_{CQI}, n_{HARQ}, n_{SR})$, $\Delta_{F\_PUCCH}(F)$, $\Delta_{TxD}(F')$, the adjustment amount, and the second offset is not specifically limited. For example, the terminal device determines the transmit power of the physical uplink control channel based on $P_{CMAX,c}(i)$, $P_{0\_PUCCH}$, $PL_c$, $h(n_{CQI}, n_{HARQ}, n_{SR})$, $\Delta_{F\_PUCCH}(F)$, $\Delta_{TxD}(F')$, the adjustment amount, and the second offset by using a formula 5 below.

Formula 5:

$$P_{\text{PUCCH}}(i) = \min \left\{ \begin{array}{l} P_{\text{CMAX,c}}(i), \\ P_{0\_\text{PUCCH}} + PL_c + h\left(n_{CQI}, n_{HARQ}, n_{SR}\right) + \Delta_{\text{F\_PUCCH}}(F) + \Delta_{TxD}(F') + g(i) + P\_CLI \end{array} \right\},$$

where $P_{PUCCH}(i)$ is the transmit power of the physical uplink control channel, $g(i)$ is the adjustment amount, and $P\_CLI$ is the second offset.

For the second implementation, when the terminal device determines the uplink transmit power based on the adjustment amount and the second offset, the terminal device further needs to obtain maximum transmit power $P_{CMAX,c}(i)$ of the terminal device, transmit power $P_{0\_PUCCH}$ that the network device expects to receive and that is of a physical uplink control channel, a downlink path loss estimate $PL_c$, a quantity $M_{PUSCH,c}(i)$ of RBs allocated by the network device to the terminal device during transmission of the physical uplink control channel, an offset $\Delta_{TF, c}(i)$ related to an MCS, and a second power parameter value $\Delta_{F\_PUCCH}(F)$ that is configured by the network device for the terminal device and that is of the physical uplink control channel; and correspondingly, the step in which the terminal device determines the uplink transmit power based on the adjustment amount and the second offset may be:

the terminal device determines transmit power of the physical uplink control channel based on $P_{CMAX,c}(i)$, $P_{0\_PUCCH}$, $PL_c$, $M_{PUSCH,c}(i)$, $\Delta_{TF}(i)$, $\Delta_{F\_PUCCH}(F)$, the adjustment amount, and the second offset.

It needs to be noted that, in this embodiment of this application, the terminal device determines the transmit power of the physical uplink control channel based on at least $P_{CMAX,c}(i)$, $P_{0\_PUCCH}$, $PL_c$, $M_{PUSCH,c}(i)$, $\Delta_{TF, c}(i)$, $\Delta_{F\_PUCCH}(F)$, the adjustment amount, and the second offset. Alternatively, the terminal device may determine the transmit power of the physical uplink control channel in combination with another power control parameter. In addition, in this embodiment of this application, a specific calculation formula used by the terminal device to determine the transmit power of the physical uplink control channel based on $P_{CMAX,c}(i)$, $P_{0\_PUCCH}$, $PL_c$, $M_{PUSCH,c}(i)$, $\Delta_{TF, c}(i)$, $\Delta_{F\_PUCCH}(F)$, the adjustment amount, and the second offset is not specifically limited. For example, the terminal device determines the transmit power of the physical uplink control channel based on $P_{CMAX,c}(i)$, $P_{0\_PUCCH}$, $PL_c$, $M_{PUSCH,c}(i)$, $\Delta_{TF, c}(i)$, $\Delta_{F\_PUCCH}(F)$, the adjustment amount, and the second offset by using a formula 6 below.

Formula 6:

$$P_{\text{PUCCH}}(i) = \min \left\{ \begin{array}{l} P_{\text{CMAX,c}}(i), \\ P_{0\_\text{PUCCH}} + PL_c + 10\log_{10}\left(M_{\text{PUCCH,c}}(i)\right) + \Delta_{\text{TF,c}}(i) + \Delta_{\text{F\_PUCCH}}(F) + g(i) + P\_CLI \end{array} \right\},$$

where $P_{PUCCH}(i)$ is the transmit power of the physical uplink control channel, $g(i)$ is the adjustment amount, and $P\_CLI$ is the second offset.

For the third implementation, when the terminal device determines the uplink transmit power based on the adjustment amount and the second offset, the terminal device further needs to obtain maximum transmit power $P_{CMAX,c}(i)$ of the terminal device, a quantity $M_{PUSCH,c}(i)$ of RBs allocated by the network device to the terminal device during transmission of a physical uplink control channel, transmit power $P_{0\_PUSCH}(j)$ that the network device expects to receive and that is of the physical uplink shared channel, a path loss compensation factor $\alpha_c(i)$, a downlink path loss estimate $PL_c$, and an offset $\Delta_{TF, c}(i)$ related to an MCS; and correspondingly, the step in which the terminal device determines the uplink transmit power based on the adjustment amount and the second offset may be:

the terminal device determines transmit power of the physical uplink shared channel based on $P_{CMAX,c}(i)$, $M_{PUSCH,c}(i)$, $P_{0\_PUSCH}(j)$, $\alpha_c(i)$, $PL_c$, $\Delta_{TF, c}(i)$, the adjustment amount, and the second offset.

It needs to be noted that, in this embodiment of this application, the terminal device determines the transmit power of the physical uplink shared channel based on at least $P_{CMAX,c}(i)$, $M_{PUSCH,c}(i)$, $P_{0\_PUSCH}(j)$, $\alpha_c(i)$, $PL_c$, $\Delta_{TF, c}(i)$, the adjustment amount, and the second offset. Alternatively, the terminal device may determine the transmit power of the physical uplink shared channel in combination with another power control parameter. In addition, in this embodiment of this application, a specific calculation formula used by the terminal device to determine the transmit power of the physical uplink shared channel based on $P_{CMAX,c}(i)$, $M_{PUSCH,c}(i)$, $P_{0\_PUSCH}(j)$, $\alpha_c(i)$, , $PL_c$, $\Delta_{TF, c}(i)$, the adjustment amount, and the second offset is not specifically limited. For example, the terminal device determines the transmit power of the physical uplink shared channel based on $P_{CMAX,c}(i)$, $M_{PUSCH,c}(i)$, $P_{o\_PUSCH}(j)$, $\alpha_c(i)$, $PL_c$, $\Delta_{TF}$, $\alpha_c(i)$, the adjustment amount, and the second offset by using a formula 7 below.

Formula 7:

$$P_{\text{PUSCH},c}(i) = \min \left\{ \begin{array}{l} P_{\text{CMAX},c}(i), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) + P\_CLI \end{array} \right\},$$

where $P_{PUSCH,c}(i)$ is the transmit power of the physical uplink shared channel, and P_CLI is the second offset.

For the fourth implementation, when the terminal device determines the uplink transmit power based on the adjustment amount and the second offset, the terminal device further needs to obtain a linear value $\hat{P}_{CMAX,c}(i)$ of maximum transmit power of the terminal device, a linear value $\hat{P}_{PUCCH}(i)$ of transmit power of a physical uplink control channel, a quantity $M_{PUSCH,c}(i)$ of RBs allocated by the network device to the terminal device during transmission of a physical uplink control channel, transmit power $P_{o\_PUSCH}(j)$ that the network device expects to receive and that is of the physical uplink shared channel, a path loss compensation factor $\alpha_c(i)$, a downlink path loss estimate $PL_c$, and an offset $\Delta_{TF}$, $\alpha_c(i)$, related to an MCS; and correspondingly, the step in which the terminal device determines the uplink transmit power based on the adjustment amount and the second offset may be:

the terminal device determines transmit power of the physical uplink shared channel based on $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF,c}(i)$, the adjustment amount, and the second offset.

It needs to be noted that, in this embodiment of this application, the terminal device determines the transmit power of the physical uplink shared channel based on at least $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF,c}(i)$, the adjustment amount, and the second offset. Alternatively, the terminal device may determine the transmit power of the physical uplink shared channel in combination with another power control parameter. In addition, in this embodiment of this application, a specific calculation formula used by the terminal device to determine the transmit power of the physical uplink shared channel based on $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF}$, $_c(i)$, , the adjustment amount, and the second offset is not specifically limited. For example, the terminal device determines the transmit power of the physical uplink shared channel based on $\hat{P}_{CMAX,c}(i)$, $\hat{P}_{PUCCH}(i)$, $M_{PUSCH,c}(i)$, $P_{o\_PUSCH}(j)$, $\alpha_c(i)$, $PL_c$, $\Delta_{TF}$, $_c(i)$, the adjustment amount, and the second offset by using a formula 8 below.

Formula 8:

$$P_{\text{PUSCH},c}(i) = \min \left\{ \begin{array}{l} 10\log_{10}\left(\hat{P}_{\text{CMAX},c}(i) - \hat{P}_{\text{PUCCH}}(i)\right), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) + P\_CLI \end{array} \right\},$$

where $P_{PUSCH,c}(i)$ is the transmit power of the physical uplink shared channel, $f_c(i)$ is the adjustment amount, and P_CLI is the second offset.

For the fifth implementation, when the terminal device determines the uplink transmit power based on the adjustment amount and the second offset, the terminal device further needs to obtain maximum transmit power $P_{CMAX,c}(i)$ of the terminal device, transmit power $P_{SRS\_OFFSET,c}(m)$ that the network device expects to receive and that is of an SRS channel, a quantity $M_{SRS,c}$ of RBs allocated by the network device to the terminal device during transmission of the SRS channel, a quantity $M_{PUSCH,c}(j)$ of RBs allocated by the network device to the terminal device during transmission of a physical uplink control channel, a downlink path loss estimate $PL_c$, and a path loss compensation factor $\alpha_c(i)$; and correspondingly, the step in which the terminal device determines the uplink transmit power based on the adjustment amount and the second offset may be:

the terminal device determines transmit power of the uplink SRS channel based on $P_{CMAX,c}(i)$, $P_{SRS\_OFFSET,c}(m)$, $M_{SRS,c}$, $M_{PUSCH,c}(j)$, $PL_c$, $\alpha_c(i)$, the adjustment amount, and the second offset.

The terminal device determines the transmit power of the uplink SRS channel based on $P_{CMAX,c}(i)$, $P_{SRS\_OFFSET,c}(m)$, $M_{SRS,c}$, $M_{PUSCH,c}(j)$, $PL_c$, $\alpha_c(i)$, the adjustment amount, and the second offset by using a formula 14 below.

Formula 14:

$$P_{\text{SRS},c}(i) = \min\left\{ P_{\text{CMAX},c}(i),\ P_{\text{SRS\_OFFSET},c}(m) + 10\log_{10}(M_{\text{SRS},c}) + P_{\text{O\_PUSCH},c}(j) + \alpha_c(j) \cdot PL_c + f_c(i) + P\_CLI \right\},$$

where $P_{SRS,c}(i)$ is the transmit power of the uplink SRS channel, $f_c(i)$ is the adjustment amount, and P_CLI is the second offset.

In this embodiment of this application, cross interference between the terminal device and another terminal device is considered. The terminal device receives the power control indication information sent by the network device, where the power control indication information indicates the second offset, the second offset is generated by the network device based on the cross interference of the terminal device, and the cross interference is caused by uplink transmission of the terminal device to downlink reception of another terminal device. The network device sends the power control indication information to the terminal device, and the terminal device determines the uplink transmit power based on the second offset indicated by the power control indication information. Because impact of the cross interference is considered in determining the uplink transmit power, the method can be applied to an NR or 5G. In addition, cross interference to another terminal device is alleviated when the uplink transmit power is determined according to the foregoing method.

An embodiment of this application provides an uplink power control method. In this embodiment of this application, a network device determines uplink transmit power that the network device currently expects to receive, and sends the uplink transmit power that the network device currently expects to receive to a terminal device; and the terminal device determines uplink transmit power based on the uplink transmit power that the network device currently expects to receive.

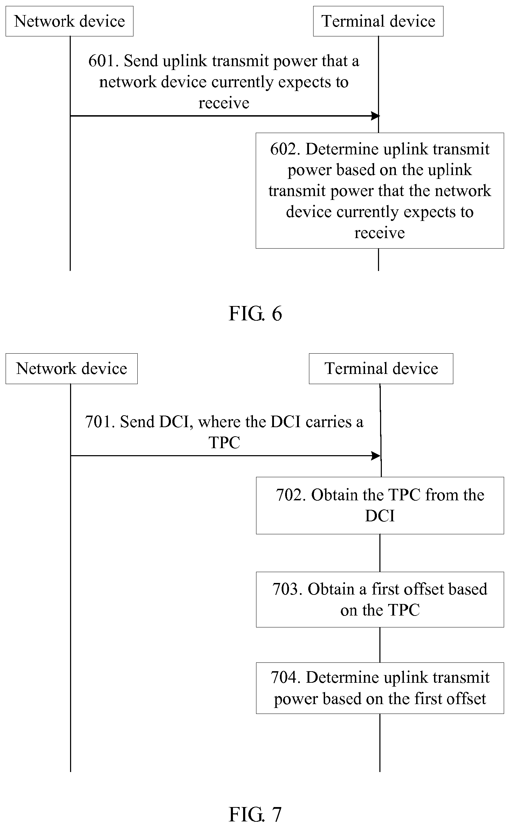

As shown in FIG. 6, the method includes the following steps.

Step 601: A network device determines uplink transmit power that the network device currently expects to receive, and sends the uplink transmit power that the network device currently expects to receive to a terminal device.

The network device obtains an interference intensity level of cross interference, obtains a power offset based on the interference intensity level, and determines, based on the power offset and uplink transmit power that the network device previously expected to receive, the uplink transmit power that the network device currently expects to receive.

A step in which the network device determines, based on the power offset and the uplink transmit power that the network device previously expected to receive, the uplink transmit power that the network device currently expects to receive may be:

the network device uses a sum of the power offset and the uplink transmit power that the network device previously expected to receive as the uplink transmit power that the network device currently expects to receive.

The network device sends configuration information to the terminal device, where the configuration information carries the uplink transmit power that the network device currently expects to receive.

If control information is transmitted between the terminal device and the network device through a physical uplink control channel, the uplink transmit power expected to be received may be reflected in $P_{o\_UE\_PUCCH}$. The configuration information sent by the network device to the terminal device may be:

```
UplinkPowerControlDedicated ::=    SEQUENCE {
    p0-UE-PUSCH            INTEGER (-11..7),
    deltaMCS-Enabled       ENUMERATED {en0, en1},
    accumulationEnabled    BOOLEAN,
    p0-UE-PUCCH            INTEGER (-11..7),
    pSRS-Offset         INTEGER (0..15),
    filterCoefficient       FilterCoefficient       DEFAULT fc4
}
```

If data information is transmitted between the terminal device and the network device through a physical uplink shared channel, the uplink transmit power expected to be received may be reflected in $P_{o\_UE\_PUSCH}$. The configuration information sent by the network device to the terminal device may be:

```
UplinkPowerControlDedicated ::=        SEQUENCE {
        p0-UE-PUSCH                    INTEGER (-11..7),
        deltaMCS-Enabled               ENUMERATED {en0, en1},
        accumulationEnabled            BOOLEAN,
        p0-UE-PUCCH                    INTEGER (-8..7),
        pSRS-Offset               INTEGER (0..15),
        filterCoefficient              FilterCoefficient        DEFAULT fc4
        }
```

Step 602: The terminal device receives the uplink transmit power that the network device currently expects to receive and that is sent by the network device, and determines uplink transmit power based on the uplink transmit power that the network device currently expects to receive.

If control information is transmitted between the terminal device and the network device through a physical uplink channel and a format of DCI is a format 1A/1B/1D/1/2A/2B/2C/2D/2/3, transmit power of the physical uplink control channel may be determined in the following first manner in this step; or if control information is transmitted between the terminal device and the network device through a physical uplink control channel and a format of DCI is a format 4/5, transmit power of the physical uplink control channel may be determined in the following second manner in this step; or if data information is transmitted between the terminal device and the network device through a physical uplink shared channel, transmit power of the physical uplink shared channel may be determined in the following third manner in this step; or if data information is transmitted between the terminal device and the network device through a physical uplink shared channel, and control information is transmitted between the terminal device and the network device through a physical uplink control channel, transmit power of the physical uplink shared channel may be determined in the following fourth manner in this step.

For the first implementation, when the terminal device determines the uplink transmit power based on the uplink transmit power that the network device currently expects to receive, the terminal device further needs to obtain maximum transmit power $P_{CMAX,c}(i)$, a downlink path loss estimate $PL_c$, a first power parameter value $h(n_{CQI}, n_{HARQ}, n_{SR})$ corresponding to a third preset format, a second power parameter value $\Delta_{F\_PUCCH}(F)$ that is configured by the network device for the terminal device and that is of a physical uplink control channel, a third power parameter value $\Delta_{TxD}(F')$ that is configured by the network device for the terminal device and that is of the physical uplink control channel, and an adjustment amount g(i); and correspondingly, the step in which the terminal device determines the uplink transmit power based on the uplink transmit power that the network device currently expects to receive may be:
the terminal device determines transmit power of the physical uplink control channel based on $P_{CMAX,c}(i)$, $PL_c$, $h(n_{CQI}, n_{HARQ}, n_{SR})$, $\Delta_{F\_PUCCH}(F)$, $\Delta_{TxD}(F')$, g(i), and the uplink transmit power that the network device currently expects to receive.

It needs to be noted that, in this embodiment of this application, the terminal device determines the transmit power of the physical uplink control channel based on at least $P_{CMAX,c}(i)$, $PL_c$, $h(n_{CQI}, n_{HARQ}, n_{SR})$, $\Delta_{F\_PUCCH}(F)$, $\Delta_{TxD}(F')$, g(i), and the uplink transmit power that the network device currently expects to receive. Alternatively, the terminal device may determine the transmit power of the physical uplink control channel in combination with another power control parameter. In addition, in this embodiment of this application, a specific calculation formula used by the terminal device to determine the transmit power of the physical uplink control channel based on $P_{CMAX,c}(i)$, $PL_c$, $h(n_{CQI}, n_{HARQ}, n_{SR})$, $\Delta_{F\_PUCCH}(F)$, $\Delta_{TxD}(F')$, g(i), and the uplink transmit power that the network device currently expects to receive is not specifically limited. For example, the terminal device determines, by using a formula 9 below, the transmit power of the physical uplink control channel based on $P_{CMAX,c}(i)$, $PL_c$, $h(n_{CQI}, n_{HARQ}, n_{SR})$, $\Delta_{F\_PUCCH}(F)$, $\Delta_{TxD}(F')$, g(i), and the uplink transmit power that the network device currently expects to receive.

Formula 9:
$$P_{\mathrm{PUCCH}}(i) = \min\left\{ \begin{array}{l} P_{\mathrm{CMAX,c}}(i), \\ P_{0\_\mathrm{PUCCH}} + PL_c + h\left(n_{CQI}, n_{HARQ}, n_{SR}\right) + \Delta_{\mathrm{F\_PUCCH}}\left(F\right) + \Delta_{TxD}(F') + g(i) \end{array} \right\},$$

where $P_{PUCCH}(i)$ is the transmit power of the physical uplink control channel, and $P_{0\_PUCCH}$ is the uplink transmit power that the network device currently expects to receive.

For the second implementation, when the terminal device determines the uplink transmit power based on the uplink transmit power that the network device currently expects to receive, the terminal device further needs to obtain maximum transmit power $P_{CMAX,c}(i)$ of the terminal device, a downlink path loss estimate $PL_c$, a quantity $M_{PUSCH,c}(i)$ of RBs allocated by the network device to the terminal device during transmission of a physical uplink control channel, an offset $\Delta_{TF,\,c}(i)$ related to an MCS, a second power parameter value $\Delta_{F\_PUCCH}(F)$ that is configured by the network device for the terminal device and that is of the physical uplink control channel, and an adjustment amount g(i); and correspondingly, the step in which the terminal device determines the uplink transmit power based on the uplink transmit power that the network device currently expects to receive may be:

the terminal device determines transmit power of the physical uplink control channel based on $P_{CMAX,c}(i)$, $PL_c$, $M_{PUSCH,c}(i)$, $\Delta_{TF,\,c}(i)$, $\Delta_{F\_PUCCH}(F)$, g(i), and transmit power that the network device expects to receive and that is of the physical uplink control channel.

It needs to be noted that, in this embodiment of this application, the terminal device determines the transmit power of the physical uplink control channel based on at least $P_{CMAX,c}(i)$, $PL_c$, $M_{PUSCH,c}(i)$, $\Delta_{TF,\,c}(i)$, $\Delta_{F\_PUCCH}(F)$, g(i), and the transmit power that the network device expects to receive and that is of the physical uplink control channel. Alternatively, the terminal device may determine the transmit power of the physical uplink control channel in combination with another power control parameter. In addition, in this embodiment of this application, a specific calculation formula used by the terminal device to determine the transmit power of the physical uplink control channel based on $P_{CMAX,c}(i)$, $PL_c$, $M_{PUSCH,c}(i)$, $\Delta_{TF}$, $\alpha_c(i)$, $\Delta_{F\_PUCCH}(F)$, g(i), and the transmit power that the network device expects to receive and that is of the physical uplink control channel is not specifically limited. For example, the terminal device determines, by using a formula 10 below, the transmit power of the physical uplink control channel based on $P_{CMAX,c}(i)$, $PL_c$, $M_{PUSCH,c}(i)$, $\Delta_{TF,\,c}(i)$, $\Delta_{F\_PUCCH}(F)$, g(i), and the transmit power that the network device expects to receive and that is of the physical uplink control channel.

Formula 10:

$$P_{PUCCH}(i) = \min\left\{ \begin{array}{l} P_{CMAX,c}(i), \\ P_{0\_PUCCH} + PL_c + 10\log_{10}\left(M_{PUCCH,c}(i)\right) + \Delta_{TF,c}(i) + \Delta_{F\_PUCCH}(F) + g(i) \end{array} \right\},$$

where $P_{PUCCH}(i)$ is the transmit power of the physical uplink control channel, and $P_{0\_PUCCH}$ is the transmit power that the network device expects to receive and that is of the physical uplink control channel.

For the third implementation, when the terminal device determines the uplink transmit power based on the uplink transmit power that the network device currently expects to receive, the terminal device further needs to obtain maximum transmit power $P_{CMAX,c}(i)$ of the terminal device, a quantity $M_{PUSCH,c}(i)$ of RBs allocated by the network device to the terminal device during transmission of a physical uplink control channel, a path loss compensation factor $\alpha_c(i)$ $\alpha_c(i)$, a downlink path loss estimate $PL_c$, an offset $\Delta_{TF,\,c}(i)$, related to an MCS, and an adjustment amount f(i); and correspondingly, the step in which the terminal device determines the uplink transmit power based on the uplink transmit power that the network device currently expects to receive may be:

the terminal device determines transmit power of the physical uplink shared channel based on $P_{CMAX,c}(i)$, $M_{PUSCH,c}(i)$, $\alpha_c(i)$, $PL_c$, $\Delta_{TF,c}(i)$, f(i), and transmit power that the network device expects to receive and that is of the physical uplink shared channel.

It needs to be noted that, in this embodiment of this application, the terminal device determines the transmit power of the physical uplink shared channel based on at least $P_{CMAX,c}(i)$, $M_{PUSCH,c}(i)$, $\alpha_c(i)$, $PL_c$, $\Delta_{TF,\,c}(i)$, f(i), and the transmit power that the network device expects to receive and that is of the physical uplink shared channel. Alternatively, the terminal device may determine the transmit power of the physical uplink shared channel in combination with another power control parameter. In addition, in this embodiment of this application, a specific calculation formula used by the terminal device to determine the transmit power of the physical uplink shared channel based on $P_{CMAX,c}(i)$, $M_{PUSCH,c}(i)$, $\alpha_c(i)$, $PL_c$, $\Delta_{TF,\,c}(i)$, f(i), and the transmit power that the network device expects to receive and that is of the physical uplink shared channel is not specifically limited. For example, the terminal device determines, by using a formula 11 below, the transmit power of the physical uplink shared channel based on $P_{CMAX,c}(i)$, $M_{PUSCH,c}(i)$, $\alpha_c(i)$, $PL_c$, $\Delta_{TF,\,c}(i)$, f(i), and the transmit power that the network device expects to receive and that is of the physical uplink shared channel.

Formula 11:

$$P_{PUSCH,c}(i) = \min\left\{ \begin{array}{l} P_{CMAX,c}(i), \\ 10\log_{10}(M_{PUSCH,c}(i)) + P_{0\_PUSCH,c}(j) + \alpha_c(j)\cdot PL_c + \Delta_{TF,c}(i) + f_c(i) \end{array} \right\},$$

where $P_{PUSCH,c}(i)$ is the transmit power of the physical uplink shared channel, and $P_{o\_PUSCH}(j)$ is the transmit power that the network device expects to receive and that is of the physical uplink shared channel.

For the fourth implementation, when the terminal device determines the uplink transmit power based on the uplink transmit power that the network device currently expects to receive, the terminal device further needs to obtain a linear value $\hat{P}_{CMAX,c}(i)$ of maximum transmit power of the terminal device, a linear value $\hat{P}_{PUCCH}(i)$ of transmit power of a physical uplink control channel, a quantity $M_{PUSCH,c}(i)$ of RBs allocated by the network device to the terminal device during transmission of a physical uplink control channel, a path loss compensation factor $\alpha_c(i)$, a downlink path loss estimate $PL_c$, an offset $\Delta_{TF,\,\alpha_c}(i)$, related to an MCS, and an adjustment amount f(i); and correspondingly, the step in which the terminal device determines the uplink transmit power based on the uplink transmit power that the network device currently expects to receive may be:

the terminal device determines transmit power of the physical uplink shared channel based on $\hat{P}_{CMAX,c}(i)$, $\hat{P}_{PUCCH}(i)$, $M_{PUSCH,c}(i)$, $\alpha_c(i)$ $PL_c$, $\Delta_{TF,\,c}(i)$ f(i), and the uplink transmit power that the network device currently expects to receive.

It needs to be noted that, in this embodiment of this application, the terminal device determines the transmit power of the physical uplink shared channel based on at least $\hat{P}_{CMAX,c}(i)$, $\hat{P}_{PUCCH}(i)$, $M_{PUSCH,c}(i)$, $\alpha_c(i)$, $PL_c$, $\Delta_{TF,\,c}(i)$, f(i), and the uplink transmit power that the network device currently expects to receive. Alternatively, the terminal device may determine the transmit power of the physical uplink shared channel in combination with another power control parameter. In addition, in this embodiment of this application, a specific calculation formula used by the terminal device to determine the transmit power of the physical uplink shared channel based on $\hat{P}_{CMAX,c}(i)$, $\hat{P}_{PUCCH}(i)$, $M_{PUSCH,c}(i)$, $_c(i)$, $PL_c$, $\Delta_{TF,\,c}(i)$,f(i), and the uplink transmit power that the network device currently expects to receive is not specifically limited. For example, the terminal device determines, by using a formula 12 below, the transmit power of the physical uplink shared channel based on $\hat{P}_{CMAX,c}(i)$, $\hat{P}_{PUCCH}(i)$, $M_{PUSCH,c}(i)$, $\alpha_c(i)$, $PL_c$, $\Delta_{TF,\,c}(i)$, f(i), and the uplink transmit power that the network device currently expects to receive.

Formula 12:
$$P_{\text{PUSCH,c}}(i) = \min \left\{ \begin{array}{l} 10\log_{10}\left(\hat{P}_{\text{CMAX},c}(i) - \hat{P}_{\text{PUCCH}}(i)\right), \\ 10\log_{10}(M_{\text{PUSCH,c}}(i)) + P_{\text{O\_PUSCH,c}}(j) + \alpha_c(j)\cdot PL_c + \Delta_{\text{TF},c}(i) + f_c(i) \end{array} \right\},$$

where $P_{PUSCH,c}(i)$ is the transmit power of the physical uplink shared channel, and $P_{o\_PUSCH}(j)$ is transmit power that the network device expects to receive and that is of the physical uplink shared channel.

In this embodiment of this application, the network device determines, based on the interference intensity level of the cross interference, the uplink transmit power that the network device currently expects to receive, and sends the uplink transmit power that the network device currently expects to receive to the terminal device; and the terminal device determines the uplink transmit power based on the uplink transmit power that the network device currently expects to receive. Because impact of the cross interference is considered in determining the uplink transmit power, the method can be applied to an NR or 5G. In addition, cross interference to another terminal device is alleviated when the uplink transmit power is determined according to the foregoing method.

An embodiment of this application provides an uplink power control method. In this embodiment of this application, a network device determines a current TPC of a terminal device based on first power control indication information, and sends the TPC to the terminal device; and the terminal device determines uplink transmit power based on the TPC.

As shown in FIG. 7, the method includes the following steps.

Step 701: A network device determines a TPC of a terminal device, and sends DCI to the terminal device, where the DCI carries the TPC.

The network device obtains an interference intensity level of cross interference, and determines the TPC of the terminal device based on the interference intensity level.

The network device obtains, from a correspondence between an interference intensity level and a TPC based on the interference intensity level, a TPC corresponding to the interference intensity level.

For example, if an interference intensity level of cross interference between the terminal device and another terminal device is 1, the TPC may be 0; or if an interference intensity level of cross interference between the terminal device and another terminal device is 2, the TPC may be -3 or the like.

In this embodiment of this application, because the cross interference is considered, a quantity of TPC indication bits increases. For example, there are only two TPCs (0 and 1) in the prior art, but there are probably four TPCs (0, 1, 2, and 3) in this embodiment of this application. For another example, there are four TPCs (0, 1, 2, and 3) in the prior art, but there are probably eight TPCs (0, 1, 2, 3, 4, 5, 6, and 7) in this embodiment of this application.

Step 702: The terminal device receives the DCI sent by the network device, and obtains the TPC from the DCI.

Step 703: The terminal device obtains a first offset based on the TPC.

The terminal device stores a first power offset set, where the first power offset set includes a correspondence between a TPC and an offset; and correspondingly, this step may be:

the terminal device obtains, based on the TPC, a first offset corresponding to the TPC from the first power offset set.

For example, when a physical uplink channel is a physical uplink control channel and a format of the DCI is a format 1A/1B/1D/1/2A/2B/2C/2D/2/3, the first power offset set is shown in Table 5 below.

**Table 5**

| TPC | First power offset set |
|---|---|
| 0 | -1 |
| 1 | 0 |
| 2 | 1 |
| 3 | 3 |
| 4 | -4 |
| 5 | -3 |
| 6 | -2 |

For another example, if the physical uplink channel is a physical uplink control channel and the format of the DCI is a format 3A, the first power offset set is shown in Table 6 below.

**Table 6**

| TPC | First power offset set |
|---|---|
| 0 | -1 |
| 1 | 1 |
| 2 | -4 |
| 3 | -2 |

For another example, if the physical uplink channel is a physical uplink shared channel and the format of the DCI is a format 3A, the first power offset set is shown in Table 7 below.

**Table 7**

| TPC | First power offset set |
|---|---|
| 0 | -1 |
| 1 | 1 |
| 2 | -4 |
| 3 | -2 |

For another example, if the physical uplink channel is a physical uplink shared channel and the format of the DCI is a format 0/3/4, the first power offset set is shown in Table 8 below.

**Table 8**

| TPC | First power offset set in an accumulated mode | First power offset set in an absolute mode |
|---|---|---|
| 0 | -1 | -4 |
| 1 | 0 | -1 |
| 2 | 1 | 1 |
| 3 | 3 | 4 |
| 4 | -4 | -8 |
| 5 | -3 | -5 |

(continued)

| TPC | First power offset set in an accumulated mode | First power offset set in an absolute mode |
|-----|-----------------------------------------------|--------------------------------------------|
| 6   | -2                                            | -2                                         |

Step 704: The terminal device determines uplink transmit power based on the first offset.

A process in which the terminal device determines the uplink transmit power based on the first offset is the same as the process in which the terminal device determines the uplink transmit power based on the first offset in step 206, and details are not described herein again.

In this embodiment of this application, the network device determines the current TPC of the terminal device based on the interference intensity level of the cross interference, and sends the TPC to the terminal device; and the terminal device determines the uplink transmit power based on the TPC. Because impact of the cross interference is considered in determining the uplink transmit power, the method can be applied to an NR or 5G. In addition, cross interference to another terminal device is alleviated when the uplink transmit power is determined according to the foregoing method.

An embodiment of this application provides an uplink power control method. In this embodiment of this application, power control indication information includes first power control indication information and second power control indication information, the first power control indication information indicates a second power offset set, the second power offset set includes at least one second offset, and the second power control indication information indicates a second offset in the second power offset set. A network device adds the first power control indication information to an RRC message, adds the second power control indication information to DCI, and sends the RRC message, the DCI, and a first offset to a terminal device. The terminal device determines the second offset based on the RRC message and the DCI, and determines uplink transmit power based on the first offset and the second offset.

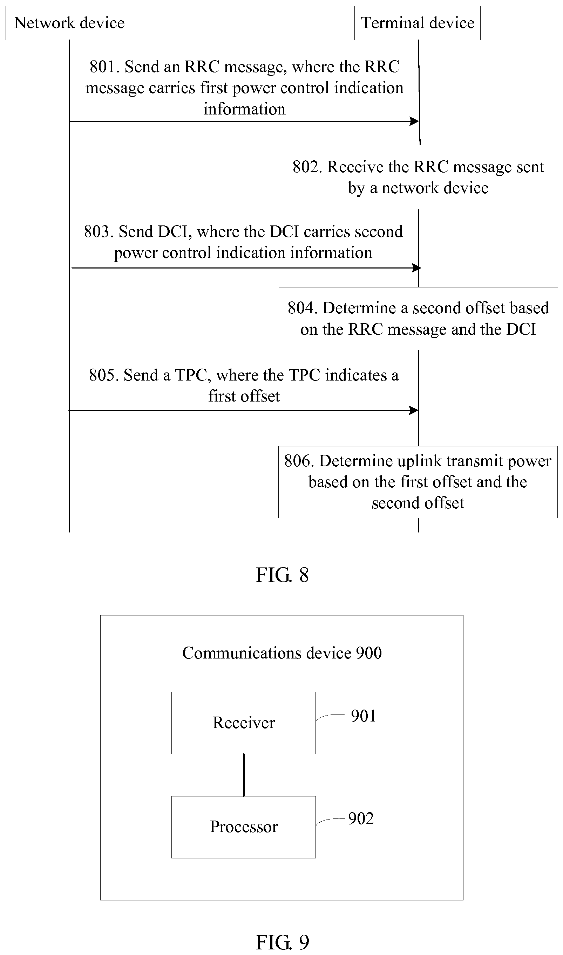

As shown in FIG. 8, the method includes the following steps.

Step 801: A network device sends an RRC message to a terminal device, where the RRC message carries first power control indication information, the first power control indication information indicates a second power offset set, and the second power offset set includes at least one second offset.

The second power offset set includes the at least one second offset, and an index (index) of each second offset. For example, when the second power offset set includes four second offsets, the four second offsets are respectively -2, -1, 0, and 1, and indexes of the four second offsets are respectively 0, 1, 2, and 3. In this case, the second power offset set is shown in Table 9 below.

**Table 9**

| Index | Second power offset set |
|-------|-------------------------|
| 0     | -3                      |
| 1     | 1                       |
| 2     | 0                       |
| 3     | 1                       |

Step 802: The terminal device receives the RRC message sent by the network device.

Step 803: The network device sends DCI to the terminal device, where the DCI carries second power control indication information, and the second power control indication information indicates a second offset in the first power offset set.

The second offset is determined by the network device based on a cross interference intensity level of cross interference of the terminal device to another terminal device, the cross interference is interference caused by uplink transmission of the terminal device to downlink reception of the another terminal device, a cell on which the terminal device camps is a serving cell, and a cell on which the another terminal device camps is a neighboring cell of the serving cell. The second power control indication information may include an index of the second offset.

In this step, the DCI may be DCI used for UL or DL resource scheduling, or may be DCI dedicated for transmitting power control information.

When the DCI is DCI used for DL or UL resource scheduling, a second power control indication information bit may be added to a format of DCI carried on a PDCCH/an EPDCCH. For example, if the first power offset set includes four second offsets, two bits are added to DCI in an existing format; and 00, 01, 10, and 11 are respectively used to represent the four second offsets in Table 9, or to indicate indexes corresponding to the four offsets.

When the DCI is DCI dedicated for transmitting power control information, for example, a new DCI format is a DCI format X (DCI format 3/3A-Like). If the first power offset set includes four second offsets, the DCI that is dedicated for transmitting power control information and that carries the second offset may be in the DCI format X: - P_CLI command number 0, P_CLI command number 1, P_CLI command number 2, P_CLI command number 3, ..., P_CLI command number N. N is related to a size of the DCI dedicated for transmitting power control information, and CRC parity bits of the DCI format X are scrambled by using a p_cli-RNTI. The P_CLI command number includes 2-bit information, indicating indexes of the four second offsets.

It needs to be noted that, if the DCI is DCI dedicated for transmitting power control information, the DCI may carry second power control indication information of a plurality of terminal devices, and a second power offset to be received by the terminal device is determined based on a correspondence between a second power control indication information field of the DCI and the terminal device.

Step 804: The terminal device receives the RRC message and the DCI that are sent by the network device, and determines the second offset.

The terminal device receives the RRC message sent by the network device, determines the first power offset set, and determines, based on the DCI, the second offset indicated by the DCI from a first offset set.

It needs to be noted that, if the DCI carries second power control indication information of a plurality of terminal devices, the terminal device obtains second power control indication information of the terminal device from the DCI based on a correspondence between a device identifier of the terminal device and a power control indication information field of the DCI.

Step 805: The network device determines a TPC, and sends the TPC to the terminal device, where the TPC indicates a first offset.

Step 806: The terminal device receives the TPC sent by the network device, and determines uplink transmit power based on the first offset and the second offset.

The terminal device obtains a transmit power adjustment amount based on the first offset, and determines the uplink transmit power based on the adjustment amount and the second offset.

If control information is transmitted between the terminal device and the network device through a physical uplink channel and a format of the DCI is a format 1A/1B/1D/1/2A/2B/2C/2D/2/3, transmit power of the physical uplink control channel may be determined in the following first manner in this step; or if control information is transmitted between the terminal device and the network device through a physical uplink control channel and a format of the DCI is a format 4/5, transmit power of the physical uplink control channel may be determined in the following second manner in this step; or if data information is transmitted between the terminal device and the network device through a physical uplink shared channel, transmit power of the physical uplink shared channel may be determined in the following third manner in this step; or if data information is transmitted between the terminal device and the network device through a physical uplink shared channel, and control information is transmitted between the terminal device and the network device through a physical uplink control channel, transmit power of the physical uplink shared channel may be determined in the following fourth manner in this step. If SRS information is transmitted between the terminal device and the network device through an SRS channel, this step may be implemented in the following fifth manner.

For the first implementation, when the terminal device determines the uplink transmit power based on the adjustment amount and the second offset, the terminal device further needs to obtain maximum transmit power $P_{CMAX,c}(i)$, transmit power $P_{o\_PUCCH}$ that the network device expects to receive and that is of an uplink control channel, a downlink path loss estimate $PL_c$, a first power parameter value $h(n_{CQI}, n_{HARQ}, n_{SR})$ corresponding to a third preset format, a second power parameter value $\Delta_{F\_PUCCH}(F)$ that is configured by the network device for the terminal device and that is of the physical uplink control channel, and a third power parameter value $\Delta_{TxD}(F')$ that is configured by the network device for the terminal device and that is of the physical uplink control channel; and correspondingly, the step in which the terminal device determines the uplink transmit power based on the adjustment amount and the second offset may be:
the terminal device determines transmit power of the physical uplink control channel based on $P_{CMAX,c}(i)$, $P_{o\_PUCCH}$, $PL_c$, $h(n_{CQI}, n_{HARQ}, n_{SR})$, $\Delta_{F\_PUCCH}(F)$, $\Delta_{TxD}(F')$, the adjustment amount, and the second offset.

For the second implementation, when the terminal device determines the uplink transmit power based on the adjustment amount and the second offset, the terminal device further needs to obtain maximum transmit power $P_{CMAX,c}(i)$ of the terminal device, transmit power $P_{o\_PUCCH}$ that the network device expects to receive and that is of a physical uplink control channel, a downlink path loss estimate $PL_c$, a quantity $M_{PUSCH,c}(i)$ of RBs allocated by the network device to the terminal device during transmission of the physical uplink control channel, an offset $\Delta_{TF,c}(i)$ related to an MCS, and a second power parameter value $\Delta_{F\_PUCCH}(F)$ that is configured by the network device for the terminal device and that is of the physical uplink control channel; and correspondingly, the step in which the terminal device determines the uplink transmit power based on the adjustment amount and the second offset may be:
the terminal device determines transmit power of the physical uplink control channel based on $P_{CMAX,c}(i)$, $P_{o\_PUCCH}$, $PL_c$, $M_{PUSCH,c}(i)$, $\Delta_{TF,c}(i)$, $\Delta_{F\_PUCCH}(F)$, the adjustment amount, and the second offset.

For the third implementation, when the terminal device determines the uplink transmit power based on the adjustment amount and the second offset, the terminal device further needs to obtain maximum transmit power $P_{CMAX,c}(i)$ of the terminal device, a quantity $M_{PUSCH,c}(i)$ of RBs allocated by the network device to the terminal device during transmission of a physical uplink control channel, transmit power $P_{o\_PUSCH}(j)$ that the network device expects to receive and that is of the physical uplink shared channel, a path loss compensation factor $\alpha_c(i)$, a downlink path loss estimate $PL_c$, and an offset $\Delta_{TF,c}(i)$ related to an MCS; and correspondingly, the step in which the terminal device determines the uplink transmit power based on the adjustment amount and the second offset may be:

the terminal device determines transmit power of the physical uplink shared channel based on $P_{CMAX,c}(i)$, $M_{PUSCH,c}(i)$, $P_{o\_PUSCH}(j)$, $\alpha_c(i)$, $PL_c$, $\Delta_{TF,c}(i)$, the adjustment amount, and the second offset.

For the fourth implementation, when the terminal device determines the uplink transmit power based on the adjustment amount and the second offset, the terminal device further needs to obtain a linear value $\overset{\Lambda}{P}_{CMAX,c}(i)$ of maximum transmit power of the terminal device, a linear value $\overset{\Lambda}{P}_{PUCCH}(i)$ of transmit power of a physical uplink control channel, a quantity $M_{PUSCH,c}(i)$ of RBs allocated by the network device to the terminal device during transmission of a physical uplink control channel, transmit power $P_{o\_PUSCH}(j)$ that the network device expects to receive and that is of the physical uplink shared channel, a path loss compensation factor $\alpha_c(i)$, a downlink path loss estimate $PL_c$, and an offset $\Delta_{TF,c}(i)$ related to an MCS; and correspondingly, the step in which the terminal device determines the uplink transmit power based on the adjustment amount and the second offset may be:

the terminal device determines transmit power of the physical uplink shared channel based on $\hat{P}_{CMAX,c}(i)$, $\overset{\Lambda}{P}_{PUCCH}(i)$, $M_{PUSCH,c}(i)$, $P_{o\_PUSCH}(j)$, $\alpha_c(i)$, $PL_c$, $\Delta_{TF,c}(i)$, the adjustment amount, and the second offset.

For the fifth implementation, when the terminal device determines the uplink transmit power based on the adjustment amount and the second offset, the terminal device further needs to obtain maximum transmit power $P_{CMAX,c}(i)$ of the terminal device, transmit power $P_{SRS\_OFFSET,c}(m)$ that the network device expects to receive and that is of an SRS channel, a quantity $M_{SRS,c}$ of RBs allocated by the network device to the terminal device during transmission of the SRS channel, a quantity $M_{PUSCH,c}(j)$ of RBs allocated by the network device to the terminal device during transmission of a physical uplink control channel, a downlink path loss estimate $PL_c$, and a path loss compensation factor $\alpha_c(i)$; and correspondingly, the step in which the terminal device determines the uplink transmit power based on the adjustment amount and the second offset may be:

the terminal device determines transmit power of the uplink SRS channel based on $P_{CMAX,c}(i)$, $P_{SRS\_OFFSET,c}(m)$, $M_{SRS,c}$, $M_{PUSCH,c}(j)$, $PL_c$, $\alpha_c(i)$, the adjustment amount, and the second offset.

For a specific calculation formula for determining the uplink power, refer to step 505. Details are not described herein again.

It needs to be noted that, any DCI in this embodiment of this application is described by using a CDI format in LTE as an example, but is not limited to DCI in LTE. Alternatively, the DCI in this embodiment of this application may be DCI in another wireless communications system, for example, DCI in an NR or 5G system. In other words, the uplink power control method provided in this embodiment of this application may be used in LTE, an NR, or 5G to determine uplink transmit power.

In this embodiment of this application, cross interference between the terminal device and another terminal device is considered. The terminal device receives the first power control indication information and the second power control indication information that are sent by the network device; and determines the second offset based on the first power control indication information and the second power control indication information, where the second offset is determined by the network device based on cross interference measurement of the terminal device, and the cross interference is caused by uplink transmission of the terminal device to downlink reception of another terminal device. The terminal device receives the first offset sent by the network device, and determines the uplink transmit power based on the first offset and the second offset. Because impact of the cross interference is considered in determining the uplink transmit power, the method can be applied to an NR or 5G. In addition, cross interference to another terminal device is alleviated when the uplink transmit power is determined according to the foregoing method.

An embodiment of this application further provides a communications device 900. The communications device 900 is configured to implement functions of the terminal device in the foregoing method embodiments. As shown in FIG. 9, the communications device 900 may include:

a receiver 901, configured to receive power control indication information sent by a network device, where the power control indication information indicates a first power offset set, and the first power offset set is any one of at least two power offset sets, where

the receiver 901 is further configured to receive a transmit power control TPC command sent by the network device, where the TPC indicates a first offset in the first power offset set; and

a processor 902, configured to determine uplink transmit power based on the first offset.

In a possible implementation, the receiver 901 is further configured to receive a radio resource control RRC message sent by the network device, where the RRC message carries the power control indication information.

In a possible implementation, the receiver 901 is further configured to receive downlink control information DCI sent by the network device, where the DCI carries the power control indication information.

In a possible implementation, a preset bit of the TPC indicates the power control indication information.

In a possible implementation, the at least two power offset sets are determined based on at least two interference intensity levels of cross interference of the terminal device, and the cross interference is interference caused by uplink transmission of the terminal device to downlink reception of another terminal device.

In a possible implementation, the processor 902 is further configured to: obtain a transmit power adjustment amount based on the first offset, and determine the uplink transmit power based on the adjustment amount.

In a possible implementation, the processor 902 is further configured to determine maximum transmit power $P_{CMAX,c}$ of the terminal device, transmit power $P_{o\_PUSCH}$ that the network device expects to receive and that is of a physical uplink shared channel, a downlink path loss estimate $PL_c$, a quantity $M_{PUSCH,c}$ of resource blocks RBs allocated by the network device to the terminal device during transmission of the physical uplink shared channel, a path loss compensation factor $\alpha_c$, and an offset $\Delta_{TF,c}$ related to an MCS; and

the processor 902 is further configured to determine transmit power of the physical uplink shared channel based on $P_{CMAX,c}$, $P_{o\_PUSCH}$, $PL_c$, $M_{PUSCH,c}$, $\alpha_c$, $\Delta_{TF,c}$, and the adjustment amount.

In a possible implementation, the processor 902 is further configured to determine maximum transmit power $P_{CMAX,c}$ of the terminal device, transmit power $P_{o\_PUCCH}$ that the network device expects to receive and that is of a physical uplink control channel, a downlink path loss estimate $PL_c$, a first power parameter value $h(n_{CQI},n_{HARQ},n_{SR})$, a second power parameter value $\Delta_{F\_PUCCH}(F)$ that is configured by the network device for the terminal device and that is of the physical uplink control channel, and a third power parameter value $\Delta_{TxD}(F')$ that is configured by the network device for the terminal device and that is of the physical uplink control channel; and

the processor 902 is further configured to determine transmit power of the physical uplink control channel based on $P_{CMAX,c}$, $P_{o\_PUCCH}$, $PL_c$, $h(n_{CQI},n_{HARQ},n_{SR})$, $\Delta_{F\_PUCCH}(F)$, $\Delta_{TxD}(F')$, and the adjustment amount.

The communications device 900 in this embodiment of this application may further include a memory. The memory may be configured to store data and program code of the communications device 900. It may be understood that FIG. 9 shows only a simplified design of the communications device 900. During actual application, the communications device 900 may include any quantity of transmitters, receivers, processors, memories, or the like, and all communications devices that can implement this embodiment of this application fall within the protection scope of this application.

It should be understood that, the foregoing and other operations and/or functions of each unit in the communications device shown in FIG. 9 in this embodiment of this application are respectively intended to implement any one of the corresponding uplink power control processes in FIG. 2 to FIG. 8. For brevity, details are not described herein again.

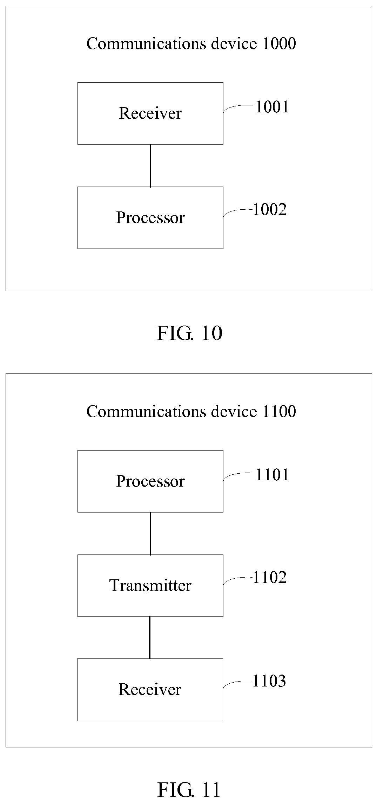

An embodiment of this application further provides a communications device, configured to implement functions of the terminal device in the foregoing method embodiments. As shown in FIG. 10, the communications device 1000 may include:

a receiver 1001, configured to receive power control indication information sent by a network device, where the power control indication information indicates a second offset, the second offset is determined by the network device based on cross interference of the terminal device, and the cross interference is interference caused by uplink transmission of the terminal device to downlink reception of another terminal device, where

the receiver 1001 is further configured to receive a transmit power control TPC command sent by the network device, where the TPC indicates a first offset; and

a processor 1002, configured to determine uplink transmit power based on the first offset and the second offset.

In a possible implementation, the receiver 1001 is further configured to receive a radio resource control RRC message sent by the network device, where the RRC message carries the power control indication information.

In a possible implementation, the receiver 1001 is further configured to receive downlink control information DCI sent by the network device, where the DCI carries the power control indication information.

In a possible implementation, the processor 1002 is further configured to: obtain a transmit power adjustment amount based on the first offset, and determine the uplink transmit power based on the adjustment amount and the second offset.

The communications device 1000 in this embodiment of this application may further include a memory. The memory may be configured to store data and program code of the communications device 1000. It may be understood that FIG. 10 shows only a simplified design of the communications device 1000. During actual application, the communications device 1000 may include any quantity of transmitters, receivers, processors, memories, or the like, and all communications devices that can implement this embodiment of this application fall within the protection scope of this application.

It should be understood that, the foregoing and other operations and/or functions of each unit in the communications device shown in FIG. 10 in this embodiment of this application are respectively intended to implement any one of the corresponding uplink power control processes in FIG. 2 to FIG. 8. For brevity, details are not described herein again.

An embodiment of this application further provides a communications device 1100. The communications device 1100 is configured to implement functions of the network device in the foregoing method embodiments. As shown in FIG. 11, the communications device 1100 may include:

a processor 1101, configured to: determine power control indication information, and determine a transmit power control TPC command, where the power control indication information indicates a first power offset set, the first power offset set is any one of at least two power offset sets, and the TPC indicates a first offset in the first power offset set; and

a transmitter 1102, configured to: send the power control indication information to a terminal device, and send the TPC to the terminal device, where the power control indication information and the TPC are used by the terminal device to determine the first offset and determine uplink transmit power based on the first offset.

In a possible implementation, the transmitter 1102 is further configured to send a radio resource control RRC message to the terminal device, where the RRC message carries the power control indication information.

In a possible implementation, the transmitter 1102 is further configured to send downlink control information DCI to the terminal device, where the DCI carries the power control indication information.

In a possible implementation, a preset bit of the TPC indicates the power control indication information.

In a possible implementation, the at least two power offset sets are determined by the network device based on at least two interference intensity levels of cross interference of the terminal device to another terminal device, the cross interference is interference caused by uplink transmission of the terminal device to downlink reception of the another terminal device, a cell on which the terminal device camps is a serving cell, and a cell on which the another terminal device camps is a neighboring cell of the serving cell.

In a possible implementation, the communications device 1100 may further include a receiver 1103;

the receiver 1103 is configured to receive interactive information sent by a network device in a neighboring cell; and

the processor 1101 is further configured to determine the power control indication information based on the interactive information, where the interactive information includes resource scheduling information.

In a possible implementation, the receiver 1103 is further configured to receive cross interference measurement report information sent by the terminal device; and

the processor 1101 is further configured to determine the power control indication information based on the cross interference measurement report information.

The communications device 1100 in this embodiment of this application may further include a memory. The memory may be configured to store data and program code of the communications device 1000. It may be understood that FIG. 11 shows only a simplified design of the communications device 1100. During actual application, the communications device 1100 may include any quantity of transmitters, receivers, processors, memories, or the like, and all communications devices that can implement this embodiment of this application fall within the protection scope of this application.

It should be understood that, the foregoing and other operations and/or functions of each unit in the communications device shown in FIG. 11 in this embodiment of this application are respectively intended to implement any one of the corresponding uplink power control processes in FIG. 2 to FIG. 8. For brevity, details are not described herein again.

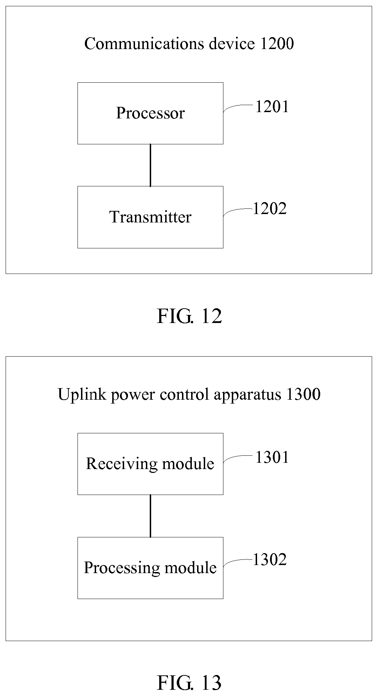

An embodiment of this application further provides a communications device 1200. The communications device 1200 is configured to implement functions of the network device in the foregoing method embodiments. As shown in FIG. 12, the communications device 1200 may include:

a processor 1201, configured to: determine power control indication information, and determine a transmit power control TPC command, where the power control indication information indicates a second offset; and

a transmitter 1202, configured to: send the power control indication information to a terminal device, and send the TPC to the terminal device, where the TPC indicates a first offset, and the first offset and the second offset are used by the terminal device to determine uplink transmit power.

In a possible implementation, the transmitter 1202 is further configured to send a radio resource control RRC message to the terminal device, where the RRC message carries the power control indication information.

In a possible implementation, the transmitter 1202 is further configured to send downlink control information DCI to the terminal device, where the DCI carries the power control indication information.

In a possible implementation, the power control indication information includes first power control indication information and second power control indication information; and the transmitter 1202 is further configured to send an RRC message to the terminal device, where the RRC message carries the first power control indication information, the first power control indication information indicates a second power offset set, and the second power offset set includes at least one second offset; and

the transmitter 1202 is further configured to send DCI to the terminal device, where the DCI carries the second power control indication information, and the second power control indication information indicates the second offset in the second power offset set.

In a possible implementation, the second offset is determined by the network device based on a cross interference intensity level of cross interference of the terminal device to another terminal device, the cross interference is interference caused by uplink transmission of the terminal device to downlink reception of the another terminal device, a cell on which the terminal device camps is a serving cell, and a cell on which the another terminal device camps is a neighboring cell of the serving cell.

In a possible implementation, the processor 1201 is configured to: obtain an interference intensity level of cross interference, and obtain the power control indication information based on the interference intensity level.

FIG. 13 shows an example structure of the uplink power control apparatus in the embodiments of this application. It should be understood that, an uplink power control apparatus 1300 shown in FIG. 13 is only an example, and the uplink power control apparatus in the embodiments of this application may further include another module or unit, or may include a module whose functions are similar to functions of each module in FIG. 13.

A receiving module 1301 may be configured to implement functions that are implemented by the receiver 901 in FIG. 9, and a processing module 1302 may be configured to implement functions that are implemented by the processor 902 in FIG. 9.

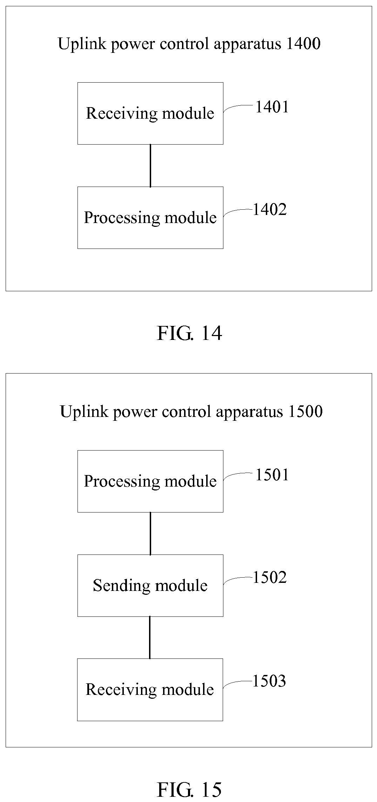

FIG. 14 shows another example structure of the uplink power control apparatus in the embodiments of this application. It should be understood that, an uplink power control apparatus 1400 shown in FIG. 14 is only an example, and the uplink power control apparatus in the embodiments of this application may further include another module or unit, or may include a module whose functions are similar to functions of each module in FIG 14.

A receiving module 1401 may be configured to implement functions that are implemented by the receiver 1001 in FIG. 10, and a processing module 1402 may be configured to implement functions that are implemented by the processor 1002 in FIG. 10.

FIG. 15 shows another example structure of the uplink power control apparatus in the embodiments of this application. It should be understood that, an uplink power control apparatus 1500 shown in FIG. 15 is only an example, and the uplink power control apparatus in the embodiments of this application may further include another module or unit, or may include a module whose functions are similar to functions of each module in FIG 13.

A processing module 1501 may be configured to implement functions that are implemented by the processor 1101 in FIG. 11, a sending module 1502 may be configured to implement functions that are implemented by the transmitter 1102 in FIG. 11, and a receiving module 1503 may be configured to implement functions that are implemented by the receiver 1103 in FIG. 11.

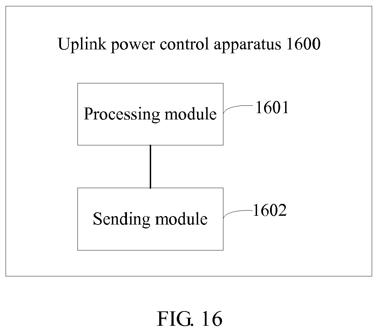

FIG. 16 shows another example structure of the uplink power control apparatus in the embodiments of this application. It should be understood that, an uplink power control apparatus 1600 shown in FIG. 16 is only an example, and the uplink power control apparatus in the embodiments of this application may further include another module or unit, or may include a module whose functions are similar to functions of each module in FIG 14.

A processing module 1601 may be configured to implement functions that are implemented by the processor 1201 in FIG. 12, and a sending module 1602 may be configured to implement functions that are implemented by the transmitter 1202 in FIG. 12.

Furthermore, the processor in the foregoing embodiments may be a central processing unit (CPU), a general purpose processor, a digital signal processor (DSP), an application-specific integrated circuit (ASIC), a field programmable gate array (FPGA) or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

Method or algorithm steps described with reference to the content disclosed in this application may be implemented by hardware, or may be implemented by a processor by executing a software instruction. The software instruction may include a corresponding software module, and the software module may be located in a RAM memory, a flash memory, a ROM memory, an EPROM memory, an EEPROM memory, a register, a hard disk, a removable hard disk, a CD-ROM, or a storage medium in any other form known in the art. An example storage medium is coupled to a processor, so that the processor can read information from the storage medium or write information into the storage medium. Certainly, the storage medium may be a component of the processor. The processor and the storage medium may be located in an ASIC. In addition, the ASIC may be located in a terminal. Certainly, the processor and the storage medium may exist as discrete components in a terminal.

A person skilled in the art should be aware that, in the foregoing one or more examples, the functions described in this application may be implemented by hardware, software, firmware, or any combination thereof. When being implemented by software, these functions may be stored in a computer readable medium or transmitted as one or more instructions or as code in the computer readable medium. The computer readable medium includes a computer storage medium and a communications medium. The communications medium includes any medium that enables a computer program to be transmitted from one place to another place. The storage medium may be any usable medium accessible to a general-purpose or special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. The invention is defined by the appended claims.

**Claims**

1. An uplink power control method performed by a terminal device, wherein the method comprises:

   • receiving power control indication information sent by a network device, wherein the power control indication information indicates a first power offset set, and the first power offset set is any one of at least two power offset sets (step 201);
   • receiving a transmit power control, TPC, command sent by the network device, wherein the TPC indicates a first offset in the first power offset set (step 203); and
   • determining an uplink transmit power for an uplink shared channel, PUSCH, based on the first offset (step 206), wherein the determining the uplink transmit power for the PUSCH based on the first offset comprises:

   ∘ obtaining a transmit power adjustment amount based on the first offset;
   ∘ obtaining a linear value $\hat{P}_{\text{CMAX,c}}(i)$ being a maximum transmit power of the terminal device, a linear value $\hat{P}_{\text{PUCCH}}(i)$ being a transmit power of a physical uplink control channel, PUCCH, a quantity $M_{\text{PUSCH,c}}(i)$ of RBs allocated by the network device to the terminal device during a transmission on the PUSCH, transmit power $P_{\text{o\_PUSCH}}(i)$ that the network device expects to receive and that is of the PUSCH, a path loss compensation factor $\alpha_c(i)$, a downlink path loss estimate $PL_c$, and an offset $\Delta_{\text{TF, c}}(i)$ related to a Modulation and Coding scheme, MCS;
   ∘ determining the transmit power of the PUSCH according to :

$$P_{PUSCH,c}(i) = min \begin{cases} 10log_{10}\left(\hat{P}_{CMAX,c}(i) - \hat{P}_{PUCCH}(i)\right), \\ 10log_{10}(M_{PUSCH,c}(i)) + P_{O\_PUSCH,c}(i) + \alpha_c(i) \times PL_c + \Delta_{TF,c}(i) + f_c(i) \end{cases}$$

   wherein $P_{PUSCH,c}(i)$ is the uplink transmit power of the PUSCH, $f_c(i)$ is the transmit power adjustment amount, and i indicates a subframe identifier.

2. The method according to claim 1, wherein the receiving the power control indication information sent by the network device comprises:
   receiving a radio resource control, RRC, message sent by the network device, wherein the RRC message carries the power control indication information.

3. The method according to claim 1, wherein the receiving the power control indication information sent by the network device comprises:
   receiving downlink control information, DCI, sent by the network device, wherein the DCI carries the power control indication information.

4. The method according to claim 1, wherein a preset bit of the TPC indicates the power control indication information.

5. The method according to claim 1, wherein the at least two power offset sets are determined by the network device based on at least two interference intensity levels of cross interference of the terminal device to another terminal device, the cross interference is interference caused by uplink transmission of the terminal device to downlink reception of the another terminal device, a cell on which the terminal device camps is a serving cell, and a cell on which the another terminal device camps is a neighboring cell of the serving cell.

6. A terminal device (900), comprising
a processor (902) configured to perform any of the methods according to claims 1 to 5.

7. A computer readable storage medium, wherein a computer program is stored in the computer readable storage medium, and the uplink power control method according to any one of claims 1 to 5 is implemented when the program is executed by a processor.

8. A computer program product, wherein when the computer program product runs on a computer, the computer performs the uplink power control method according to any one of claims 1 to 5.

**Patentansprüche**

1. Aufwärtsstrecken-Leistungsregelverfahren, das durch eine Endgerätevorrichtung ausgeführt wird, wobei das Verfahren Folgendes umfasst:

• Empfangen von durch eine Netzvorrichtung gesendeten Leistungsregel-Angabeinformationen, wobei die Leistungsregel-Angabeinformationen eine erste Leistungsoffsetmenge angeben und die erste Leistungsoffsetmenge eine beliebige von mindestens zwei Leistungsoffsetmengen ist (Schritt 201);
• Empfangen eines durch die Netzvorrichtung gesendeten Sendeleistungsregel- bzw. TPC-Befehls, wobei die TPC ein erstes Offset in der ersten Leistungsoffsetmenge angibt (Schritt 203); und
• Bestimmen einer Aufwärtsstrecken-Sendeleistung für einen geteilten Aufwärtsstreckenkanal PUSCH auf der Basis des ersten Offsets (Schritt 206), wobei das Bestimmen der Aufwärtsstrecken-Sendeleistung für den PUSCH auf der Basis des ersten Offsets Folgendes umfasst:

◦ Erhalten eines Sendeleistungs-Justierungsbetrags auf der Basis des ersten Offsets;
◦ Erhalten eines linearen Werts $\hat{P}_{\mathrm{CMAX},c}(i)$ , der eine maximale Sendeleistung der Endgerätevorrichtung ist, eines linearen Werts $\hat{P}_{PUCCH}(i)$, der eine Sendeleistung eines physischen Aufwärtsstrecken-Steuerkanals PUCCH ist, einer Anzahl $M_{PUSCH,c}(i)$ von RB, die durch die Netzvorrichtung an die Endgerätevorrichtung während einer Übertragung auf dem PUSCH vergeben wird, einer Sendeleistung $P_{o\_PUSCH}(i)$, die die Netzvorrichtung zu empfangen erwartet und die von dem PUSCH ist, eines Pfadverlust-Kompensationsfaktors $\alpha_c(i)$, einer Abwärtsstrecken-Pfadverlustschätzung $PL_c$ und eines Offsets $\Delta_{\mathrm{TF},c}(i)$ in Bezug auf ein Modulation- und Codierungsschema MCS;
◦ Bestimmen der Sendeleistung des PUSCH gemäß:

$$P_{PUSCH,c}(i) = \min \begin{cases} 10log_{10}\left(\hat{P}_{CMAX,c}(i) - \hat{P}_{PUCCH}(i)\right), \\ 10log_{10}(M_{PUSCH,c}(i)) + P_{O\_PUSCH,c}(i) + \alpha_c(i) \times PL_c + \Delta_{TF,c}(i) + f_c(i) \end{cases}$$

wobei $P_{PUSCH,c}(i)$ die Aufwärtsstrecken-Sendeleistung des PUSCH ist, $f_c(i)$ der Sendeleistungs-Justierungsbetrag ist und i eine Subrahmenkennung angibt.

2. Verfahren nach Anspruch 1, wobei das Empfangen der durch die Netzvorrichtung gesendeten Leistungsregel-

**EP 3 531 753 B1**

Angabeinformationen Folgendes umfasst:
Empfangen einer durch die Netzvorrichtung gesendeten Funkressourcensteuerungs- bzw. RRC-Nachricht, wobei die RRC-Nachricht die Leistungsregel-Angabeinformationen führt.

3. Verfahren nach Anspruch 1, wobei das Empfangen der durch die Netzvorrichtung gesendeten Leistungsregel-Angabeinformationen Folgendes umfasst:
Empfangen von durch die Netzvorrichtung gesendeten Abwärtsstrecken-Steuerinformationen DCI, wobei die DCI die Leistungsregel-Angabeinformationen führen.

4. Verfahren nach Anspruch 1, wobei ein voreingestelltes Bit der TPC die Leistungsregel-Angabeinformationen angibt.

5. Verfahren nach Anspruch 1, wobei die mindestens zwei Leistungsoffsetmengen durch die Netzvorrichtung auf der Basis von mindestens zwei Störungsintensitätspegeln von Übersprechstörungen der Endgerätevorrichtung einer anderen Endgerätevorrichtung bestimmt werden, wobei die Übersprechstörungen Störungen sind, die durch Aufwärtsstrecken-Übertragung der Endgerätevorrichtung am Abwärtsstrecken-Empfang der anderen Endgerätevorrichtung verursacht werden, eine Zelle, auf der die Endgerätevorrichtung campt, eine bedienende Zelle ist und eine Zelle, auf der die andere Endgerätevorrichtung campt, eine benachbarte Zelle der bedienenden Zelle ist.

6. Endgerätevorrichtung (900), umfassend:
einen Prozessor (902), ausgelegt zum Ausführen beliebiger der Verfahren nach Anspruch 1 bis 5.

7. Computerlesbares Speichermedium, wobei ein Computerprogramm in dem computerlesbaren Speichermedium gespeichert ist und das Aufwärtsstrecken-Leistungsregelverfahren nach einem der Ansprüche 1 bis 5 implementiert wird, wenn das Programm durch einen Prozessor ausgeführt wird.

8. Computerprogrammprodukt, wobei, wenn das Computerprogrammprodukt auf einem Computer läuft, der Computer das Aufwärtsstrecken-Leistungsregelverfahren nach einem der Ansprüche 1 bis 5 ausführt.

## Revendications

1. Procédé de contrôle de puissance de liaison montante réalisé par un dispositif terminal, le procédé comprenant :

   • la réception d'informations d'indication de contrôle de puissance envoyées par un dispositif de réseau, les informations d'indication de contrôle de puissance indiquant un premier ensemble de décalage de puissance, et le premier ensemble de décalage de puissance étant l'un quelconque d'au moins deux ensembles de décalage de puissance (étape 201) ;
   • la réception d'une commande de contrôle de puissance d'émission, TPC, envoyée par le dispositif de réseau, le TPC indiquant un premier décalage dans le premier ensemble de décalage de puissance (étape 203) ; et
   • la détermination d'une puissance d'émission de liaison montante pour un canal partagé de liaison montante, PUSCH, sur la base du premier décalage (étape 206), la détermination de la puissance d'émission de liaison montante pour le PUSCH sur la base du premier décalage comprenant :

      ◦ l'obtention d'une quantité d'ajustement de la puissance d'émission basée sur le premier décalage ;
      ◦ l'obtention d'une valeur linéaire $\hat{P}_{CMAX,c}(i)$ qui est une puissance d'émission maximale du dispositif terminal, une valeur linéaire $\hat{P}_{PUCCH}(i)$ qui est une puissance d'émission d'un canal de contrôle de liaison montante physique, PUCCH, une quantité $M_{PUSCH,c}(i)$ de blocs de ressource RB alloués par le dispositif de réseau au dispositif terminal pendant une transmission sur le PUSCH, une puissance d'émission $P_{o\_PUSCH}(i)$ que le dispositif de réseau s'attend à recevoir et qui est du PUSCH, un facteur de compensation de perte de chemin $\alpha_c(i)$, une estimation de perte de chemin de liaison descendante $PL_c$, et un décalage $\Delta_{TF.c}(i)$ lié à un schéma de modulation et de codage, MCS ;
      ◦ la détermination de la puissance d'émission du PUSCH conformément à :

$$P_{\mathrm{PUSCH},c}(i) = \min \begin{cases} 10\log_{10}\left(\hat{P}_{\mathrm{CMAX},c}(i) - \hat{P}_{\mathrm{PUCCH}}(i)\right), \\ 10\log_{10}(M_{\mathrm{PUSCH},c}(i)) + P_{\mathrm{O\_PUSCH},c}(i) + \alpha_c(i) \cdot PL_c + \Delta_{\mathrm{TF},c}(i) + f_c(i) \end{cases}$$

$P_{PUSCH.c}$(i) étant la puissance d'émission de liaison montante du PUSCH, $f_c$(i) étant la quantité d'ajustement de la puissance d'émission, et i indiquant un identifiant de sous-trame.

**2.** Procédé selon la revendication 1, la réception des informations d'indication de contrôle de puissance envoyées par le dispositif de réseau comprenant :
la réception d'un message de contrôle de ressources radio, RRC, envoyé par le dispositif de réseau, le message RRC transportant les informations d'indication de contrôle de puissance.

**3.** Procédé selon la revendication 1, la réception des informations d'indication de contrôle de puissance envoyées par le dispositif de réseau comprenant :
la réception d'informations de contrôle de liaison descendante, DCI, envoyées par le dispositif de réseau, le DCI transportant les informations d'indication de contrôle de puissance.

**4.** Procédé selon la revendication 1, un bit prédéfini du TPC indiquant les informations d'indication de contrôle de puissance.

**5.** Procédé selon la revendication 1, les au moins deux ensembles de décalage de puissance étant déterminés par le dispositif de réseau sur la base d'au moins deux niveaux d'intensité d'interférence de l'interférence croisée du dispositif terminal à un autre dispositif terminal, l'interférence croisée étant une interférence causée par une transmission de liaison montante du dispositif terminal à une réception de liaison descendante de l'autre dispositif terminal, une cellule sur laquelle le dispositif terminal campe étant une cellule de service, et une cellule sur laquelle l'autre dispositif terminal campe étant une cellule voisine de la cellule de service.

**6.** Dispositif terminal (900), comprenant :
un processeur (902) configuré pour réaliser l'un quelconque des procédés selon les revendications 1 à 5.

**7.** Support de stockage lisible par ordinateur, un programme informatique étant stocké dans le support de stockage lisible par ordinateur, et le procédé de contrôle de puissance de liaison montante selon l'une quelconque des revendications 1 à 5 étant mis en œuvre lorsque le programme est exécuté par un processeur.

**8.** Produit de programme informatique, lorsque le produit de programme informatique s'exécute sur un ordinateur, l'ordinateur réalisant le procédé de contrôle de puissance de liaison montante selon l'une quelconque des revendications 1 à 5.

FIG. 1

```
┌─────────────────┐                              ┌─────────────────┐
│ Network device  │                              │ Terminal device │
└─────────────────┘                              └─────────────────┘
         │                                                 │
         │  201. Send an RRC message, where the RRC message │
         │       carries power control indication information│
         │─────────────────────────────────────────────────▶│
         │                                                 │
         │         ┌───────────────────────────────────────┴──┐
         │         │ 202. Determine a first power offset set based on│
         │         │      the power control indication information   │
         │         └───────────────────────────────────────┬──┘
         │  203. Send DCI, where the DCI carries a TPC       │
         │─────────────────────────────────────────────────▶│
         │                                                 │
         │         ┌───────────────────────────────────────┴──┐
         │         │      204. Obtain the TPC from the DCI        │
         │         └───────────────────────────────────────┬──┘
         │                                                 │
         │         ┌───────────────────────────────────────┴──┐
         │         │ 205. Determine a first offset indicated by the│
         │         │      TPC from the first power offset set      │
         │         └───────────────────────────────────────┬──┘
         │                                                 │
         │         ┌───────────────────────────────────────┴──┐
         │         │ 206. Determine uplink transmit power based on │
         │         │      the first offset                         │
         │         └───────────────────────────────────────┬──┘
         │                                                 │
```

FIG. 2

```
┌─────────────────┐                              ┌─────────────────┐
│ Network device  │                              │ Terminal device │
└─────────────────┘                              └─────────────────┘
         │                                                 │
         │  301. Send DCI to a terminal device, where the DCI│
         │  carries power control indication information and a TPC│
         │─────────────────────────────────────────────────▶│
         │                                                 │
         │            ┌────────────────────────────────────┴──┐
         │            │ 302. Obtain the power control indication  │
         │            │   information and the TPC from the DCI    │
         │            └────────────────────────────────────┬──┘
         │                                                 │
         │            ┌────────────────────────────────────┴──┐
         │            │ 303. Determine a first power offset set   │
         │            │ indicated by the power control indication │
         │            │ information, and determine a first offset │
         │            │ indicated by the TPC from the first power │
         │            │             offset set                   │
         │            └────────────────────────────────────┬──┘
         │                                                 │
         │            ┌────────────────────────────────────┴──┐
         │            │ 304. Determine uplink transmit power based│
         │            │          on the first offset              │
         │            └────────────────────────────────────┬──┘
         │                                                 │
```

FIG. 3

| Network device | | Terminal device |
|---|---|---|

401. Send DCI, where the DCI carries a TPC, and preset bit information of the TPC is power control indication information

402. Obtain the TPC from the DCI, and obtain the power control indication information from the TPC

403. Determine a first power offset set indicated by the power control indication information, and determine a first offset indicated by the TPC from the first power offset set

404. Determine uplink transmit power based on the first offset

**FIG. 4**

| Network device | | Terminal device |
|---|---|---|

501. Send power control indication information, where the power control indication information indicates a second offset

502. Receive the power control indication information sent by a network device

503. Send a TPC, where the TPC indicates a first offset

504. Receive the TPC sent by the network device

505. Determine uplink transmit power based on the first offset and the second offset

**FIG. 5**

| Network device | | Terminal device |
|---|---|---|

601. Send uplink transmit power that a network device currently expects to receive

602. Determine uplink transmit power based on the uplink transmit power that the network device currently expects to receive

FIG. 6

| Network device | | Terminal device |
|---|---|---|

701. Send DCI, where the DCI carries a TPC

702. Obtain the TPC from the DCI

703. Obtain a first offset based on the TPC

704. Determine uplink transmit power based on the first offset

FIG. 7

Network device | Terminal device

801. Send an RRC message, where the RRC message carries first power control indication information

802. Receive the RRC message sent by a network device

803. Send DCI, where the DCI carries second power control indication information

804. Determine a second offset based on the RRC message and the DCI

805. Send a TPC, where the TPC indicates a first offset

806. Determine uplink transmit power based on the first offset and the second offset

FIG. 8

Communications device 900

Receiver — 901

Processor — 902

FIG. 9

Communications device 1000

Receiver —1001

Processor —1002

FIG. 10

Communications device 1100

Processor —1101

Transmitter —1102

Receiver —1103

FIG. 11

Communications device 1200

Processor —1201

Transmitter —1202

**FIG. 12**

Uplink power control apparatus 1300

Receiving module —1301

Processing module —1302

**FIG. 13**

Uplink power control apparatus 1400

Receiving module — 1401

Processing module — 1402

FIG. 14

Uplink power control apparatus 1500

Processing module — 1501

Sending module — 1502

Receiving module — 1503

FIG. 15

Uplink power control apparatus 1600

Processing module — 1601

Sending module — 1602

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710010991
- CN 201710184415
- EP 2779760 A1
- US 20140213315 A1